(19) **Europäisches Patentamt / European Patent Office / Office européen des brevets**

(11) **EP 4 697 806 A1**

(12) **EUROPEAN PATENT APPLICATION**

(43) Date of publication:
**18.02.2026 Bulletin 2026/08**

(21) Application number: **25195044.0**

(22) Date of filing: **11.08.2025**

(51) International Patent Classification (IPC):
**H04W 36/00** $^{(2009.01)}$

(52) Cooperative Patent Classification (CPC):
**H04W 36/0058; H04W 36/0085**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.08.2024 US 202463682292 P**
**23.09.2024 US 202463697940 P**
**04.10.2024 US 202463703878 P**
**08.11.2024 US 202463718555 P**
**16.01.2025 US 202563746230 P**
**09.05.2025 US 202563803386 P**
**04.06.2025 US 202563817965 P**
**25.07.2025 US 202519281548**

(71) Applicant: **Samsung Electronics Co., Ltd.**
**Suwon-si, Gyeonggi-do 16677 (KR)**

(72) Inventors:
• **CHENG, Yuan-Sheng**
**San Jose, CA 95134 (US)**
• **BAE, Jung Hyun**
**San Jose, CA 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **CSI-RS BASED L1 MEASUREMENT FOR L1/L2 TRIGGERED MOBILITY**

(57) Systems (100), methods, and apparatuses (105) are disclosed for channel state information reference signal, CSI-RS,-based L1 measurement for L1/L2 triggered mobility, LTM. In one or more examples, the systems (100), apparatuses (105), and methods include receiving, from a candidate cell by a user equipment, UE,, a CSI-RS; implementing LTM based on identifying a trigger condition, the trigger condition being based on a message received from a serving cell; performing a CSI measurement for the candidate cell; switching to the candidate cell based on the CSI measurement and on receiving a cell switch command from the serving cell; and transmitting a measurement report to the candidate cell based on the CSI measurement and based on switching to the candidate cell.

**FIG. 1**

EP 4 697 806 A1

**Description**

TECHNICAL FIELD

The disclosure relates generally to memory systems. In particular, the subject matter relates to channel state information reference signal (CSI-RS)-based layer 1 (L1) measurement for layer 1 / layer 2 (L1/L2) triggered mobility (LTM).

BACKGROUND

The present background section is intended to provide context only, and the disclosure of any concept in this section does not constitute an admission that said concept is prior art.

Wireless communications systems are widely deployed to provide various types of communication content, such as voice, video, packet data, messaging, broadcast, and so on. These systems may be capable of supporting communication with multiple users by sharing the available system resources (e.g., time, frequency, and power). Examples of such multiple-access systems include code division multiple access (CDMA) systems, time division multiple access (TDMA) systems, frequency division multiple access (FDMA) systems, and orthogonal frequency division multiple access (OFDMA) systems, (e.g., a Long Term Evolution (LTE) system, or a New Radio (NR) system). A wireless multiple-access communications system may include a number of base stations or access network nodes, each simultaneously supporting communication for multiple communication devices, which may be otherwise known as user equipment (UE). A base station may provide multiple UEs access to certain network services such as transmission of voice and data communications.

SUMMARY

In various embodiments, the systems and methods described herein include systems, methods, and apparatuses for CSI-RS-based L1 measurement for L1/L2 triggered mobility (LTM).

In some aspects, the techniques described herein relate to a method including: receiving, by a user equipment (UE), a channel state information reference signal (CSI-RS) from a candidate cell; implementing layer 1/layer 2 (L1/L2) triggered mobility (LTM) based on identifying a trigger condition, the trigger condition being based on a message received from a serving cell; performing an L1 measurement of the CSI-RS from the candidate cell; switching to the candidate cell based on the L1 measurement and on receiving a cell switch command from the serving cell; and transmitting a measurement report to the candidate cell based on the L1 measurement and based on switching to the candidate cell.

In some aspects, the techniques described herein relate to a method, wherein the trigger condition for the measurement report is based on the message indicating activation of a transmission configuration indication (TCI) state associated with the CSI-RS.

In some aspects, the techniques described herein relate to a method, wherein the trigger condition is based on the message including a medium access control (MAC)-control element (CE), the MAC-CE being received in the cell switch command or before the cell switch command.

In some aspects, the techniques described herein relate to a method, further including receiving at least one MAC-CE before the cell switch command, the at least one MAC-CE updating a transmission configuration indication state for the candidate cell.

In some aspects, the techniques described herein relate to a method, further including a CSI-RS resource indicator (CRI) in the measurement report.

In some aspects, the techniques described herein relate to a method, wherein a bit width of the CRI is based on a number of configured CSI-RS in a corresponding resource set for the measurement report.

In some aspects, the techniques described herein relate to a method, wherein: the measurement report includes an $L \times M$ beam index for one or more candidate cells; $L$ indicates a number of candidate cells; $M$ indicates a number of beams per cell; and $L$ and $M$ are configured by radio resource control (RRC).

In some aspects, the techniques described herein relate to a method including: implementing, by a user equipment (UE), layer 1/layer 2 (L1/L2) triggered mobility (LTM) based on the UE receiving a cell switch command from a serving cell; receiving, by the UE, a channel state information reference signal (CSI-RS) from a candidate cell; performing a CSI measurement for the candidate cell based on the cell switch command from the serving cell; and transmitting a measurement report to the candidate cell based on the CSI measurement and based on switching to the candidate cell.

In some aspects, the techniques described herein relate to a method, wherein the measurement report is transmitted in at least one of: PUSCH scheduled by RAR; first PUSCH based on a configured grant (CG); and or first PUSCH based on a dynamic grant (DG).

In some aspects, the techniques described herein relate to a method, further including: determining an amount of CSI data from candidate cells that the UE is storing exceeds a preconfigured limit; and removing at least a portion of the CSI data.

In some aspects, the techniques described herein relate to a method, further including receiving a message from the serving cell indicating support for at least one of: type-I codebook for CSI reporting and report quantity based on at least one of CSI-RS resource indicator (CRI), channel quality indicator (CQI), precoding matrix indicator (PMI), or rank indicator (RI).

In some aspects, the techniques described herein relate to a method, wherein: the CSI-RS from the candidate cell is periodic or semipersistent, and activation of semipersistent CSI-RS from the candidate cell is based on a medium access control (MAC)-control element (CE) message.

In some aspects, the techniques described herein relate to a method, further including receiving a second message from the serving cell, the second message indicating to remove a portion of CSI data stored by the UE.

In some aspects, the techniques described herein relate to a method, wherein: the second message includes a downlink control information or medium access control (MAC)-control element (CE) message; the second message indicates a criterion for selecting the portion of CSI data to remove; and the criterion is based on at least one of a priority of CSI data or an age of CSI data.

In some aspects, the techniques described herein relate to a method including: receiving, from a network node, one or more conditional mobility configurations, each conditional mobility configuration specifying a candidate target cell and at least one execution condition; activating evaluation of the execution condition of a given conditional mobility configuration; monitoring, via one or more layer-one measurements, the execution condition; determining that the execution condition is satisfied; and in response to determining that the execution condition is satisfied, performing a layer 1/layer 2 (L1/L2) triggered mobility (LTM) cell switch procedure to the candidate target cell.

In some aspects, the techniques described herein relate to a method, wherein the execution condition includes at least one of: a signal strength condition based on a reference signal received power (RSRP) of the candidate target cell satisfying an RSRP threshold of a serving cell, or a timing condition based on the signal strength condition being continuously satisfied over a predefined time-to-execute period.

In some aspects, the techniques described herein relate to a method, wherein the one or more conditional mobility configurations are received via at least one of a radio resource control message or a medium access control-control element.

In some aspects, the techniques described herein relate to a method, further including: maintaining a time advance timer corresponding to the candidate target cell; and performing a random-access channel (RACH)-less LTM cell switch procedure based on the time advance timer remaining unexpired when the execution condition is satisfied.

In some aspects, the techniques described herein relate to a method, further including: for devices supporting user equipment (UE)-based time advance measurement, performing random-access channel (RACH)-less LTM handover based on the time advance measurement being available when the execution condition is satisfied.

In some aspects, the techniques described herein relate to a method, further including performing random-access channel (RACH)-based LTM handover based on at least one of: a time advance timer expiring before the execution condition is satisfied, or a time advance measurement being unavailable when the execution condition is satisfied.

In some aspects, the techniques described herein relate to an apparatus which is configured to perform any one of the above methods or the steps therein.

BRIEF DESCRIPTION OF THE DRAWINGS

In the following section, the aspects of the subject matter disclosed herein will be described with reference to exemplary embodiments illustrated in the figures, in which:

These and other features and advantages of the present disclosure will be appreciated and understood with reference to the specification, claims, and appended drawings, wherein:

FIG. 1 illustrates an example system in accordance with one or more implementations as described herein.

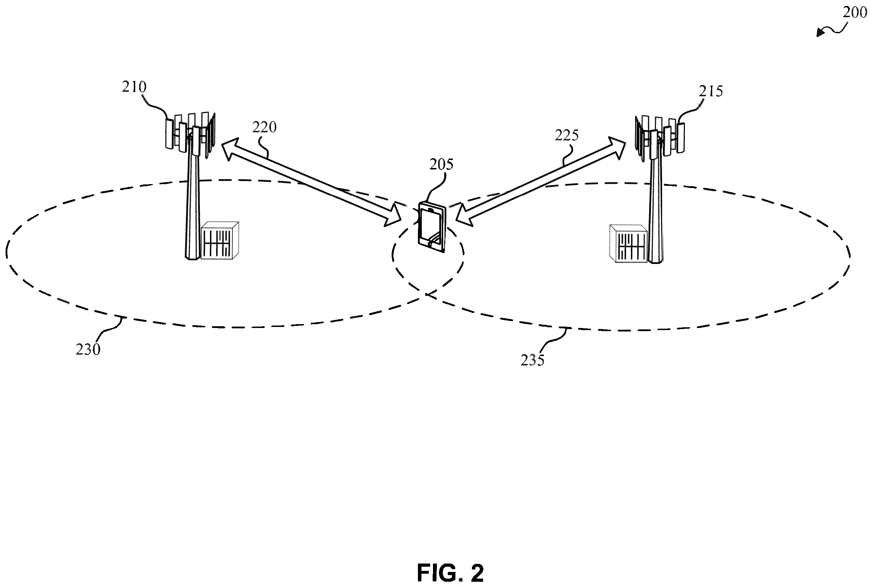

FIG. 2 illustrates an example system in accordance with one or more implementations as described herein.
FIG. 3 illustrates an example system flow in accordance with one or more implementations as described herein.
FIG. 4 illustrates an example system flow in accordance with one or more implementations as described herein.
FIG. 5 is a block diagram of an electronic device in a network environment, according to embodiments described herein.
FIG. 6 illustrates an example system in accordance with example implementations described herein.
FIG. 7 depicts a flow diagram illustrating an example method associated with the disclosed systems, in accordance with example implementations described herein.
FIG. 8 depicts a flow diagram illustrating an example method associated with the disclosed systems, in accordance with example implementations described herein.

FIG. 9 illustrate a timeline illustrating example events associated with the disclosed systems, in accordance with example implementations described herein.

FIG. 10 illustrate a timeline illustrating example events associated with the disclosed systems, in accordance with example implementations described herein.

FIG. 11 illustrate a timeline illustrating example events associated with the disclosed systems, in accordance with example implementations described herein.

While the present systems and methods are susceptible to various modifications and alternative forms, specific embodiments thereof are shown by way of example in the drawings and will herein be described. The drawings may not be to scale. It should be understood, however, that the drawings and detailed description thereto are not intended to limit the present systems and methods to the particular form disclosed, but to the contrary, the intention is to cover all modifications, equivalents, and alternatives falling within the spirit and scope of the present systems and methods as defined by the appended claims.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms, and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms, and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

Some examples of the disclosure may be based on channel state information reference signal (CSI-RS). CSI-RS can include a reference signal transmitted from a base station (e.g., gNodeB, gNB) to a user equipment (UE) to facilitate channel sounding and reporting, allowing the UE to measure the quality of the downlink channel and report this information back to the gNB, enabling the gNB to optimize its transmissions. The disclosure further relates to CSI-RS based layer 1 (L1) and layer 2 (L2) measurements. In particular, the disclosure may relate to L1/L2 triggered mobility (LTM), which can be referred to as lower layer triggered mobility. LTM can speed up handover procedures and reduce interruption during cell changes, using L1/L2 signaling to trigger the handover, rather than relying on higher layer signaling (e.g., radio resource control (RRC), layer 3 (L3), etc.).

Legacy NR/LTE mobility (e.g., handover) may be based on layer 3 (L3) measurement reporting based on L3 signaling, such as reference signal received power (RSRP), reference signal received quality (RSRQ), signal-to-interference-plus-noise ratio (SINR), etc. With legacy handover, when a UE switches to another cell because the UE reports and the network determines, based on what the UE reports, that the other cell can provide better service, RRC reconfiguration with synchronization can be triggered to change the primary cell (PCell) and primary secondary cell (PSCell).

The disclosure may be based on long-term evolution (LTE) and/or new radio (NR) radio access technology (RAT) that can help define how data is transmitted over the air in 5G networks. L1/L2 triggered mobility (LTM) can provide benefits to mobility/handover procedures. In some cases, different levels of handover (e.g., LTM handover) may be based on L1/L2 signaling, which can include reporting based on L1 RSRP, and may include mixing in a control signal (e.g., control layer and physical layer). For some systems, L1 measurement may be restricted to synchronization signal block (SSB).

Wider, unrefined beams (e.g., SSB beams) may be used during an initial acquisition process where a UE establishes initial contact with a network. Once a UE is connected (e.g., in RRC connected mode), beam refinement procedures can be initiated using CSI-RS, resulting in beams with higher directivity and gain, resulting in improved link budget. Accordingly, wider, unrefined beams may be used for initial access and broader coverage, while finer, refined beams, enabled by CSI-RS, may be used for optimizing data transmission in the connected mode, leading to better signal quality and higher data rates. Thus, CSI-RS can facilitate the process of channel measurement and feedback, allowing the network to select and refine beams for optimal performance.

Legacy handover can be based on L3 mobility (e.g., RRC-based mobility). With some systems. when a handover is performed, L1/L2 may be reset (e.g., RRC reset and reconfiguration), which can result in longer latency, larger overhead, and longer interruption time, all of which can adversely affect user experience. Some systems may use SSB-based measurement, but in some cases such systems do not incorporate CSI-RS, which can result in drawbacks, such as SSB-based measurement being limited to wider, unrefined SSB beams. For example, SSB-based measurement may not be capable of using refined CSI-RS beams. Another drawback of SSB-based measurement can include link adaptation after cell switch. Link adaptation can occur due to lack of a CSI measurement in the candidate cell after cell switch. Link adaptation may include adjusting transmission parameters to optimize performance in a new cell, based on information received during and/or after the handover, which can increase handover latency. Based on these drawbacks, systems that implement SSB-based measurement may experience relatively low reliability and high latency.

With some systems, CSI-RS measurement can be implemented independently. For example, a CSI-RS-based L1 measurement report can be triggered as an individual CSI report. For example, a network may configure a candidate CSI-RS L1 measurement report independently (e.g., independent of a condition) or the network may configure a candidate CSI-RS L1 measurement report after receiving an SSB-based L1 measurement report for candidate cells. However, implementing CSI-RS measurement independently may result in additional RRC reconfiguration between an initial report (e.g., based on SSB) and a refined report (e.g., based on CSI-RS) since the configuration of the refined report may depend on the outcome of the initial report.

The systems and methods described herein may include and/or may be based on LTM configurations associated with measurement reports, CSI-RS based L1 measurement report content, CSI pre-acquisition (e.g., CSI early acquisition), sending a CSI report to the target cell, and conditional LTM.

The systems and methods described herein include multiple advantages and benefits. For example, the systems and methods described herein improve LTM based on incorporating CSI-RS with LTM. Incorporating CSI-RS with LTM can enable use of finer, refined beams with LTM (e.g., in addition to wider, unrefined beams, SSB beams). Also, enabling CSI-RS with LTM can enable CSI measurement in the candidate cell after cell switch, where a base station may transmit CSI-RS, the UE may measure CSI and report the CSI to the base station, and finer adaptations of a given beam may be performed. Also, enabling CSI-RS with LTM can provide compatibility between LTM and conditional handover. Additionally, enabling CSI-RS with LTM reduces or avoids additional RRC reconfiguration between an initial report (e.g., SSB-based report) and a refined report (e.g., CSI-based report). Accordingly, CSI-RS-based LTM can provide improved performance, higher reliability, and lower latency (e.g., compared to SSB-based measurement).

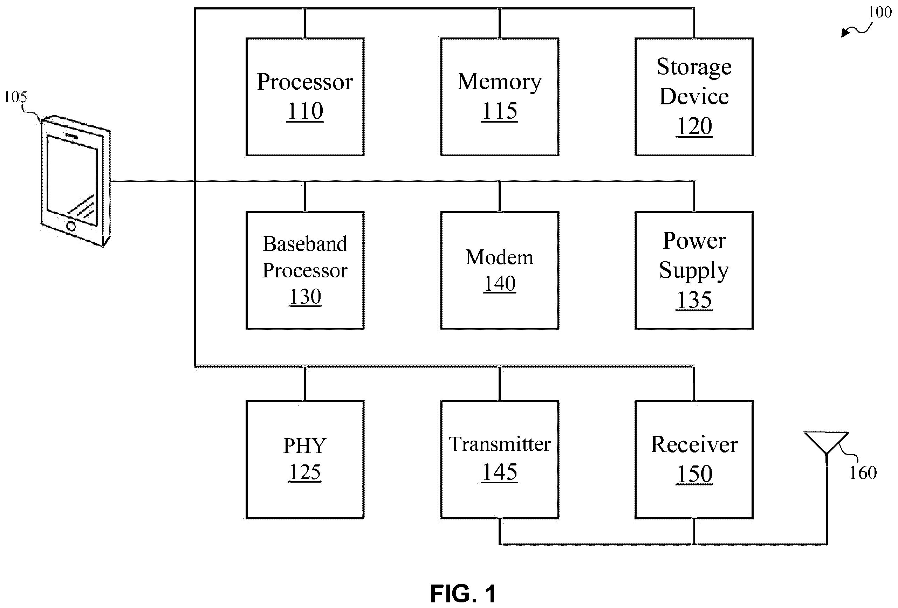

FIG. 1 illustrates an example of a system 100, of a wireless communications network, that supports CSI-RS-based L1 measurement for L1/L2 triggered mobility (LTM) with example implementations described herein.

As shown, system 100 may include device 105. Device 105 may include a mobile device, a cellphone, a smartphone, a tablet, a laptop, a wearable computing device, an Internet-of-things device, a user equipment (UE), a vehicle (e.g., autonomous vehicle), any device configured to transmit and/or receive a wireless signal, or any wireless-/wired network-connected device. As shown, device 105 may include a processor 110, a memory 115, a storage device 120, a physical layer (PHY) 125, a baseband processor 130, a power supply 135, a modem 140, at least one transceiver (e.g., transmitter 145, receiver 150), and at least one antenna (e.g., antenna 160). Device 105 may communicate with one or more devices via at least antenna 160 and at least one network (e.g., short-range wireless communication network, long-range wireless communication network).

In some cases, device 105 may include an input device, a sound output device, a display device, an audio module, a sensor module, an interface, a haptic module, a camera module, a communication module, a subscriber identification module (SIM) card, or an antenna module. In one embodiment, at least one component (e.g., display device, camera module) may be omitted from device 105, or one or more other components may be added to device 105. Some of the components may be implemented as a single integrated circuit (IC). For example, a sensor module (e.g., a fingerprint sensor, an iris sensor, or an illuminance sensor) may be embedded in a display of device 105.

In some cases, processor 110 may execute software (e.g., a program) to control at least one other component (e.g., a hardware, a software component, etc.) of device 105 coupled with processor 110. Processor 110 may perform various data processing or computations. As at least part of the data processing or computations, processor 110 may load a command or data received from another component (e.g., modem 140, receiver 150, etc.) in memory 115, process the command or the data stored in memory 115, and store resulting data in storage device 120. In some cases, processor 110 may include a main processor (e.g., a central processing unit (CPU) or an application processor (AP)), and an auxiliary processor (e.g., a graphics processing unit (GPU), an image signal processor (ISP), a sensor hub processor, and/or a communication processor (CP)) that is operable independently from, or in conjunction with, the main processor. Additionally, or alternatively, the auxiliary processor may be adapted to consume less power than the main processor, or execute a particular function. The auxiliary processor may be implemented as being separate from, or a part of, the main processor.

In some examples, memory 115 may store various data used by at least one component (e.g., processor 110, modem 140, etc.) of device 105. The various data may include, for example, software (e.g., a program, application) and input data or output data for a command related thereto. In some cases, memory 115 may include volatile memory (e.g., random-access memory (RAM) dynamic RAM (DRAM), static RAM (SRAM)) and/or non-volatile memory (e.g., NAND flash memory). In some cases, memory 115 and/or storage device 120 may include internal memory and/or external memory. One or more programs may be stored in the memory 115 as software, and may include, for example, an operating system (OS), middleware, and/or an application.

In some examples, PHY 125 may include an electronic circuit configured to implement physical layer functions of the open systems interconnection (OSI) model (e.g., in conjunction with a network interface controller of device 105). PHY 125 may connect a link layer device (e.g., medium access control (MAC) to a physical medium of device 105 (e.g., radio waves, electromagnetic radiation, radiofrequency (RF) energy).

In some examples, baseband processor 130 may manage wireless radio communication functions, including connecting to cellular networks, handling voice calls, and transmitting data, etc. Baseband processor 130 acts as the bridge between the device's digital components and the radio frequency signals used for wireless communication. For example, baseband processor 130 may convert digital data into analog signals for transmission over the air and/or convert received signals back into digital data. Baseband processor 130 may manage various signal processing tasks like encoding, decoding, error correction, and filtering, ensuring data integrity and efficient communication. In some cases, one or more components of device 105 may perform one or more operations associated with a handover procedure. For example, baseband processor 130 may perform one or more operations associated with a handover procedure (e.g., in conjunction with processor 110, memory 115, etc.).

In some examples, power supply 135 (e.g., a battery, a power adapter, power management module, etc.) may supply power to at least one component of device 105. In some examples, power supply 135 may include, for example, a cell (e.g., primary cell) that is not rechargeable, a cell (e.g., secondary cell) that is rechargeable, a fuel cell, etc.

In some examples, modem 140 may enable device 105 to connect to a network (e.g., LTE network, 5G network). In some cases, modem 140 may be incorporated in and/or operate in conjunction with baseband processor 130. In conjunction with baseband processor 130, transmitter 145, and/or receiver 150, modem 140 may be configured to manage radio communication, receiving and transmitting signals between a base station and device 105. In some cases, modem 140 may manage encoding and decoding of data, allowing device 105 to send and receive information (e.g., browsing the internet, making calls, or streaming video). Modem 140 may be configured to control one or more aspects of a user plane, managing data transmission between device 105 and the applications or servers accessed by device 105.

A communication module of device 105 may support establishing a direct (e.g., wired) communication channel and/or a wireless communication channel between device 105 and at least one external electronic device and performing communication via the established communication channel. The communication module may include one or more communication processors that are operable independently from processor 110 and may support a direct (e.g., wired) communication and/or a wireless communication. The communication module may include a wireless communication module (e.g., a cellular communication module, a short-range wireless communication module, transmitter 145, receiver 150, antenna 160, etc.) or a wired communication module (e.g., a local area network (LAN) communication module, a power line communication (PLC) module, etc.). A corresponding one of these communication modules may communicate with the external electronic device via at least a first network (e.g., a short-range communication network, such as BLUETOOTH®, wireless-fidelity (Wi-Fi) direct, a standard of the Infrared Data Association (IrDA)) or a second network (e.g., a long-range communication network, such as a cellular network, the Internet, or a computer network, such as LAN or wide area network (WAN)). These various types of communication modules may be implemented as a single component (e.g., a single IC), or may be implemented as multiple components (e.g., multiple ICs) that are separate from each other. The wireless communication module may identify and/or may authenticate device 105 in a communication network using subscriber information (e.g., international mobile subscriber identity (IMSI)) stored in the subscriber identification module.

In some examples, antenna 160 (e.g., of transmitter 145 and/or receiver 150) may transmit a signal (e.g., RF energy) to and/or receive a signal from or one or more devices external to device 105. Antenna 160 may include one or more antennas. For example, antenna 160 may include at least one antenna appropriate for a communication scheme used in the communication network. A signal or power received by antenna 160 may be received by receiver 150 of device 105, and/or a signal or power transmitted by antenna 160 may be generated by transmitter 145.

Commands or data may be transmitted or received between device 105 and an external electronic device via a server coupled to at least one network. All or some of the operations executed at device 105 may be executed at one or more external electronic devices. For example, if device 105 performs a function or a service automatically, or in response to a request from a user or another device, device 105, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to device 105. The device 105 may provide the outcome, with or without further processing of the outcome, as at least part of a reply to the request. To that end, a cloud computing, distributed computing, or client-server computing technology may be used, for example.

**FIG.** 1 illustrates an example of a wireless communications system 200, of a wireless communications network, that supports CSI-RS-based L1 measurement for L1/L2 triggered mobility (LTM).

In the illustrated example, wireless communications system 200 may include device 205, base station 210, and base station 215. Device 205 may be an example of device 105 of FIG. 1. Base station 210 may connect device 205 to a core network (e.g., a central, high-speed backbone of a telecommunications network, responsible for routing data and connecting different parts of the network).

As shown, wireless communications system 200 may include link 220, which may include an uplink connection and a downlink connection established between device 205 and base station 210. Base station 210 may use link 220 to convey control and/or data information to device 205. And device 205 may use link 220 to convey control and/or data information to base station 210. As shown, wireless communications system 200 may include link 225, which may include an uplink connection and a downlink connection established between device 205 and base station 215. For example, device 205 may perform a handover procedure to switch from base station 210 to base station 215. Device 205 may then establish link 225 with base station 215.

In the illustrated example, base station 210 may be associated with a geographic coverage area in which communication with one or more UEs (e.g., device 205) is supported. For example, base station 210 may provide cell coverage to device 205. In some cases, base station 210 may be configured as a serving cell to device 205 (e.g., serving cell 230).

In some cases, base station 215 may be associated with another geographic coverage area in which communication with one or more UEs (e.g., device 205) is supported. For example, base station 215 may provide cell coverage to device 205 (e.g., based on a handover procedure). In some cases, base station 215 may be a candidate cell to device 205 (e.g., candidate cell 235) in a handover procedure.

When device 205 powers on, device 205 may initiate a cell search procedure to find an appropriate cell for connection. For example, device 205 may tune to a specific frequency and scan for potential cell carriers, detecting synchronization signals, and decoding system information, etc. Device 205 may use this information to select a cell and establish communication. In some cases, device 205 may search for and detect synchronization signals, such as primary synchronization signal (PSS) and secondary synchronization signal (SSS), which device 205 may use to acquire frequency and time synchronization with a given cell. The PSS and SSS can help device 205 to determine a physical cell identity (PCI) of the cell. Once device 205 has synchronization and PCI, device 205 may decode the PBCH. The PBCH can include the master information block (MIB), which device 205 may decode to extract key information about the cell, including configuration parameters. Device 205 may decode system information blocks (SIBs), which provide more detailed information about the cell. Based on the acquired information, device 205 may select a suitable cell for communication and follow an initial access procedure with the selected cell.

System 200 may depict aspects regarding CSI-RS-based L1 measurement report for candidate cell(s) that is triggered based on activation of a transmission configuration indicator (TCI) state. For example, an LTM L1 measurement report can be triggered by the activation of a TCI state associated with CSI-RS of a candidate cell. In some cases, the results of CSI-RS-based L1 measurement can provide additional beam refinement compared to SSB-based measurement (e.g., SSB-only measurement).

A network may configure TCI states of one or more cells (e.g., candidate cell 235) other than the current serving cell (e.g., serving cell 230). For instance, the TCI states of one or more candidate cells can be activated in advance before one of these cells becomes a serving cell. Activating these cells in advance enables device 205 to be downlink (DL) synchronized with those cells (e.g., with candidate cell 235), thereby facilitating a faster cell switch to one of those cells when cell switch is triggered. All the activated TCI states, except those received in the cell switch command, may be deactivated upon LTM cell switch execution.

In some cases, pre-activated TCI state(s) associated with an SSB can correspond to potential target beam(s) in a candidate cell (e.g., candidate cell 235). Additional beam refinement procedures can be taken based on these SSB-based beams. The systems and methods described herein provide an LTM type of L1 measurement report (e.g., CSI-RS L1 RSRP report). CSI-RS resources associated with finer beams for a given candidate cell (e.g., each candidate cell) may be preconfigured in LTM configurations. In some cases, when associated SSB(s) in LTM TCI states are activated, only the L1-RSRP on CSI-RS resource sets associated with the active TCI states may be reported.

In some cases, the beam selection of the LTM L1 measurement report may be based on a number of beams per candidate cells and a number of candidate cells (e.g., based on candidate cells with active TCI states). In some cases, a CSI L1 measurement report may include M beams per cell and N candidate cells, where N cell represents the total number of cells in the report determined by the active TCI state associated with SSB, where N is smaller than maximum number of candidate cell in the report L. Alternatively, the CSI L1 measurement report may include M beams per cell and L candidate cells, where L may be determined by the active TCI state associated with SSB. In some cases, M and L may be based on a UE capability report. M and L may be configured as part of RRC configuration.

Based on the CSI-RS-based L1 RSRP report, the network may activate and indicate, in a cell switch command, a TCI state associated with the CSI-RS. In some cases, TCI states with source RS being the measured CSI-RS(s) are among TCI-states configured in the LTM TCI states, which may be based on pre-configuration or RRC reconfiguration. Additionally, or alternatively, an activation mechanism may be implemented (e.g., for preconfigured LTM TCI states) such that once TCI state with associated SSB is active and the new CSI-RS-based L1 RSRP report is triggered, the TCI states with associated CSI-RS is also considered activated (e.g., determined active by the network, in conjunction with base station 210 and/or base station 215), which can reduce activation delay.

LTM can support activating and indicating single TCI state concurrently in a cell switching command. In such cases, when TCI state with SSB as source RS is activated and indicated in the cell switch command, the new CSI-RS-based L1 RSRP report can be triggered after switching to the target cell, without further steps to trigger the report, which can reduce associated latencies (e.g., latency for phase of transmit beam management in the target cell).

LTM procedures described herein may specify the content of a CSI-RS-based report. For example, LTM may specify the content of an inter-cell CSI-RS-based L1 measurement of candidate cell(s). LTM can include a network configuring one or more resource sets for one or more cells. In some cases, LTM may provide a cross-cell CSI-RS resource indicator (CRI). When an L1 RSRP report includes CSI-RS L1-RSRP (e.g., only CSI-RS L1-RSRP, does not include SSB), the network may configure multiple resource sets for multiple cells and the cross-cell CRI may be used in each L1-RSRP report.

In some cases, the CRI may be included in the LTM of L1 measurement report (e.g., CSI-RS L1 RSRP report). The bit width of the CRI may be based on the total number of configured CSI-RS in the corresponding resource sets for a given report. In some cases, the bit width CRI may be based on the formula $\lceil \log_2(K_s^{CSI-RS}) \rceil$, where $K_s^{CSI-RS}$ is the total number of configured CSI-RS in the corresponding resource sets for the report. The order of CRI may be on the order of the configured resources and resource sets (e.g., corresponding to multiple cells). In some cases, a differential RSRP may be taken relative to the best RSRP across cells. For example, instead of reporting an absolute RSRP value for a given beam, device 205 may report the difference in RSRP between the given beam and the beam with the strongest signal (e.g., the best RSRP).

An L1-RSRP process described herein that is based on SSB and CSI-RS can involve varying UE complexity. Thus, the configured values of L and M for the L1-RSRP report (e.g., and corresponding UE capabilities) may differ from (e.g., be configured to be different from) the values of an SSB-based report. Table 1 indicates a mapping order of CSI fields of one report for CRI/RSRP reporting for L1/L2 triggered mobility.

**Table 1**

| CSI report number | CSI fields |
|---|---|
| CSI report #n | CRI #1 as in Table 6.3.1.1.2-6, if reported |
| | CRI #2 as in Table 6.3.1.1.2-6, if reported |
| | ... |
| | *CRI # L × M* as in Table 6.3.1.1.2-6, if reported |
| | RSRP #1 as in Table 6.3.1.1.2-6, if reported |
| | Differential RSRP #2 as in Table 6.3.1.1.2-6, if reported |
| | ... |
| | Differential RSRP # *L × M* as in Table 6.3.1.1.2-6, if reported |

NOTE: *L* is the number of reported cells provided by higher layer parameter *noOfReportedCell* and *M* is the number of reported CRI/RSRP pairs per cell and equal to the value provided by higher layer parameter *nrofReportedRSPerCell*.

Variation of the LTM L1 measurement report can include both SSB and CSI-RS (e.g., hybrid or mixed SSB/CSI-RS L1 RSRP report). When an L1 RSRP report contains both SSB and CSI-RS (e.g., one or more cells configured with a SSB resource set and one or more cells configured with a CSI-RS resource set), the invention provides an SSB CSI index (SCI). In some cases, the SCI may be an index across an SSB resource set and CSI-RS resource set. The SCI may be based on the number of SSB and number of CSI-RS associated with the respective SSB/CSI-RS resource sets in the L1 RSRP report. In some cases, the bit width of the SCI may be based on the total number of configured SSB and CSI-RS in the corresponding resource sets for the report. In some cases, the bit width SCI may be based on the formula $\lceil \log_2(K_s^{RS}) \rceil$, where $K_s^{RS}$ is the total number of configured SSB and CSI-RS in the corresponding resource sets for the report. In some cases, the differential RSRP may be taken across cells and all SSB and CSI-RS.

The L1-RSRP processes described herein based on SSB and CSI-RS can involve UEs with varying complexity. Thus, the configured values of L and M for a mixed SSB/CSI-RS L1 RSRP report (e.g., and corresponding UE capabilities, capabilities of device 205) may differ from (e.g., be configured to be different from) values in an SSB-based report or L1-RSRP report. In the case of LTM mixed SSB/CSI-RS L1 RSRP reports, the beam selection may be $M_{SSB}$ beams out of $L_{SSB}$ candidate cells for the SSB resource set and $M_{CSI-RS}$ beams out of $L_{CSI-RS}$ candidate cells for CSI-RS resource set. In some cases, UE capability for beam per cell number combinations may be reported in the mixed SSB/CSI-RS L1 RSRP report in the form of a ($M_{SSB}$, $L_{SSB}$, $M_{CSI-RS}$, $L_{CSI-RS}$) tuple.

The modified mapping order for the L1 RSRP report are depicted in Table 2. For example, Table 2 may show the mapping order of CSI fields of one report for SCI /RSRP reporting for L1/L2 triggered mobility (LTM).

**Table 2**

| CSI report number | CSI fields |
|---|---|
| CSI report #n | SCI #1 as in Table 6.3.1.1.2-6, if reported |
| | SCI #2 as in Table 6.3.1.1.2-6, if reported |
| | ... |
| | SCI # $K_s^{RS}$ as in Table 6.3.1.1.2-6, if reported |
| | RSRP #1 as in Table 6.3.1.1.2-6, if reported |
| | Differential RSRP #2 as in Table 6.3.1.1.2-6, if reported |
| | ... |
| | Differential RSRP # $K_s^{RS}$ as in Table 6.3.1.1.2-6, if reported |
| NOTE: $K_s^{RS}$ is the total number of configured SSB and CSI-RS resources in the corresponding resource sets for the report. SCI is the index across different SSB and CSI resource sets used in this report instant. | |

One factor that can reduce LTM latency is avoiding L3 reset (e.g., RRC reset and reconfiguration). Another factor that can reduce LTM latency is a UE performing DL pre-sync and uplink (UL) pre-sync for scenarios to reduce the overall cell switch time. DL pre-sync and UL pre-sync may include a UE (e.g., device 205) establishing downlink synchronization and uplink synchronization with a target cell (e.g., candidate cell 235) before a handover or mobility event occurs.

In addition to DL/UL pre-sync, CSI-based LTM described herein may include device 205 performing CSI pre-acquisition for candidate cells. CSI pre-acquisition can be referred to as CSI early acquisition. CSI pre-acquisition can improve the throughput significantly after a cell switch. Device 205 may perform CSI pre-acquisition before a cell switch or during a cell switch. It is noted that CSI pre-acquisition may reduce the effect of link adaptation that can occur based on SSB-only reporting.

Since the scenarios for CSI acquisition for candidate cells can be different from CSI acquisition for a serving cell, a set of separated capabilities from existent capabilities may be considered (e.g., a UE capable of Type II codebook CSI reporting for serving cell does not imply the UE also supports Type II codebook for candidate cells). UE capabilities for supporting CSI pre-acquisition of candidate cells before or during cell switching command may include at least one from, but not limited to, the following list:

- Maximum number of candidate cells for CSI pre-acquisition;
- Separate reports for intra frequency candidate cells and inter frequency candidate cells;
- Separate reports for synchronized cells and asynchronized cells;
- Maximum number of CSI report associated with CSI pre-acquisition in a slot;
- Type of CSI-Report supported (e.g., aperiodic-CSI report, semipersistent-CSI report on physical uplink control channel (PUCCH), semipersistent-CSI-report on physical uplink shared channel (PUSCH), periodic CSI report on PUCCH);
- Type of supporting codebook: Type I codebook or Type II codebook;
- Single panel or multi-panel support; and/or
- Supporting report quantities (e.g., CRI, channel quality indicator (CQI), precoding matrix indicator (PMI), rank indicator (RI), time-domain channel property (TDCP), etc.).

CSI pre-acquisition can add overhead to UE operation. Accordingly, CSI pre-acquisition may be implemented based on UE capability. In some cases, base station 210 may determine capability of device 205 and enable or disable CSI pre-acquisition accordingly. In some cases, base station 210 may enable CSI pre-acquisition based on device 205 signaling CSI pre-acquisition capability to base station 210. In some cases, one or more feature and/or one or more items of content may be restricted for CSI pre-acquisition for candidate cells during LTM. In some cases, CSI pre-acquisition may be limited to CRI/CQI/PMI/RI for Type-I codebook.

In some cases, implementing CSI pre-acquisition may be based on the type of CSI-report. Periodic CSI report and semi-persistent-CSI report can include a UE (e.g., device 205) performing measurement, computing CSI feedback, and reporting, which can increase the burden on the UE and may not be suitable to the limited time before and during LTM cell switch. Thus, in some cases, aperiodic CSI-RS reporting may be supported (e.g., may be the only supporting report type in some cases) for CSI pre-acquisition of candidate cells.

In some aspects, CSI pre-acquisition performed on candidate cell 235 can take additional time when candidate cell 235 is not synchronized with serving cell 230 (e.g., based on frame or symbol synchronization). In some cases, CSI pre-acquisition may be limited to (e.g., enabled only for) candidate cells synchronized with serving cell 230.

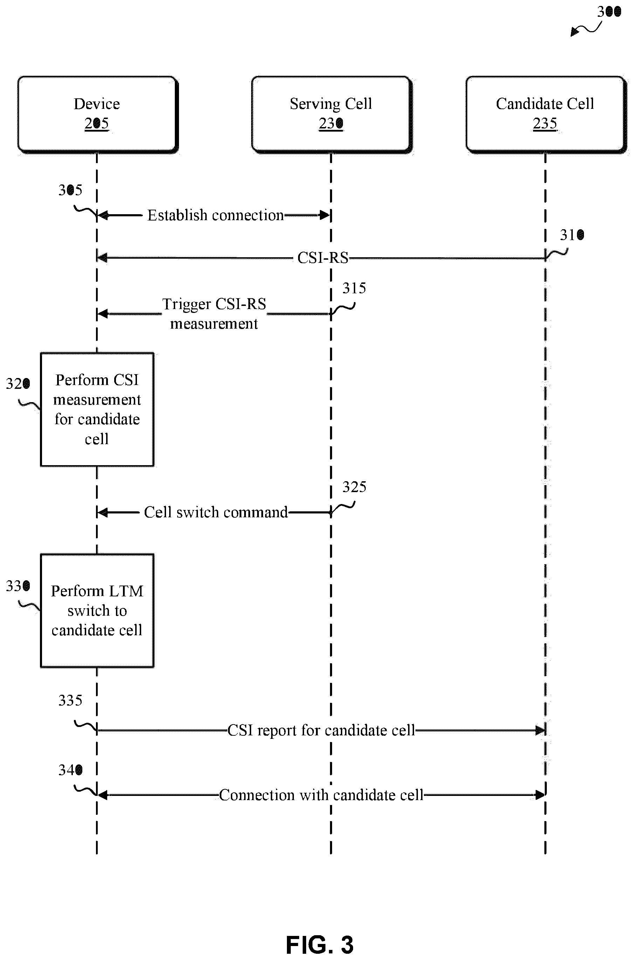

**FIG. 3** depicts a flow diagram illustrating an example system flow 300 associated with the disclosed systems, in accordance with example implementations described herein. In some cases, system flow 300 may depict an example timeline associated with CSI pre-acquisition. System flow 300 may depict a procedure of a UE reporting candidate cell CSI to a candidate cell, where the CSI report is triggered before the UE receives the LTM cell switch command. The depicted system flow 300 is just one implementation and one or more operations of system flow 300 may be rearranged, reordered, omitted, and/or otherwise modified such that other implementations are possible and contemplated.

At 305, a connection may be established between device 205 serving cell 230. For example, device 205 may establish a connection with serving cell 230 (e.g., based on RACH, etc.).

At 310, candidate cell 235 may provide CSI-RS to device 205. For example, before device 205 receives a cell switch command from serving cell 230, candidate cell 235 may provide CSI-RS to device 205.

At 315, serving cell 230 may trigger LTM CSI-RS measurement. For example, serving cell 230 may indicate activation of a TCI state (e.g., associated with the CSI-RS at 310 and/or with candidate cell 235), and the activation of the TCI state may trigger the associated CSI-RS measurement for candidate cell.

At 320, device 205 may perform CSI measurement for candidate cell 235. For example, based on the CSI-RS received at 310, device 205 may perform CSI measurement for candidate cell 235.

At 325, serving cell 230 may send a cell switch command to device 205. In some cases, the cell switch command may include information regarding candidate cell 235.

At 330, device 205 may switch from serving cell 230 to candidate cell 235. For example, based on the cell switch command, device 205 may perform an LTM switch to candidate cell 235.

At 335, device 205 may send a CSI measurement report to candidate cell 235. For example, based on the CSI measurement at 320, device 205 may determine the CSI report and send the CSI report to candidate cell 235. In some cases, the CSI measurement report at 335 may be based on CSI early acquisition (e.g., early CSI measurement report).

At 340, a connection may be established between device 205 and candidate cell 235. In some cases, the connection between device 205 and candidate cell 235 may be established independent of the CSI report sent at 335.

With LTM CSI pre-acquisition for a candidate cell, implementation may include reporting CSI to a candidate cell (e.g., candidate cell 235) and/or reporting CSI to a serving cell (e.g., serving cell 230). In either case, the CSI measurement may be triggered before mobile device 205 receives the LTM cell switch command from serving cell 230.

As shown, at 335, device 205 may send a report of the CSI of candidate cell 235 to candidate cell 235. In some cases, device 205 may send a report of multiple CSIs of multiple candidate cells to one or more candidate cells (e.g., at least to candidate cell 235). An advantage of this approach is it results in less signaling overhead between candidate cell 235 and serving cell 230. In some cases, the CSI report may be received by the target cell at a later time. In some cases, the CSI report at 335 may be transmitted via a MAC-CE (e.g., LTM message based on a MAC-CE format) and/or uplink control information (UCI). The potential first UL grant to transmit the CSI report can be one of the following options: for RACH-based LTM, UL grant scheduled by RAR; UL grant from configured grant (CG) or dynamic grant (DG) after cell switch; PUSCH with RRC reconfiguration complete message.

In some cases, device 205 may not establish UL-synchronization for each candidate cell before the LTM cell switch command. In the case of physical downlink control channel (PDCCH) order-based UL pre-synchronization during LTM (e.g., based on no random-access response (RAR) feedback corresponding to the random-access channel (RACH)), device 205 may confirm that UL-synchronization for the target cell (e.g., candidate cell 235) is established after device 205 receives the LTM cell switch command from serving cell 230.

In some cases, device 205 may not confirm that it has reliable uplink timing for the one or more candidates before device 205 receives the LTM cell switch command from serving cell 230. For a more reliable uplink transmission, device 205 may report CSI to the target cell (e.g., candidate cell 235) after device 205 receives the LTM cell switch command from serving cell 230.

The CSI resources for candidate CSI acquisition for each candidate cell may be preconfigured for one or more candidate cells. In some cases, the CSI-RS measurement may be triggered by a MAC-CE. For example, the trigger mechanism of CSI acquisition on the candidate cell may be based on a MAC-CE (e.g., LTM activation MAC-CE) that triggers the CSI report for the candidate cell. In some cases, this CSI report may be aperiodic (e.g., presumed to be aperiodic).

In some examples, the CSI-RS measurement may be triggered based on activation of a TCI state (e.g., one or more TCI states). For example, the trigger mechanism of CSI acquisition on the candidate cell may be based on activation of a TCI state for at least one candidate cell (e.g., candidate cell 235). From the time a TCI state of candidate cell 235 is activated, device 205 may consider candidate cell 235 a potential target cell. In some cases, CSI acquisition on candidate cell(s) may be based on periodic CSI-RS and/or semipersistent CSI-RS.

Issues can arise when CSI acquisition is triggered before the cell switch command, while the reporting time is delayed after the cell switch. For example, the CSI acquisition for a candidate cell may occur too early before LTM cell switch, resulting in reporting out-of-date CSI after cell switch. Also, CSI acquisition on candidate cell(s) may be based on periodic CSI-RS or semipersistent CSI-RS, and a UE supporting this can continue updating CSI on candidate cell(s) until the cell switch happens. Since there can be uncertainty whether a candidate will become the target cell before the LTM cell switch command, device 205 may store acquired CSI for multiple candidate cells before the cell switch command. Therefore, the systems and methods described herein may provide mechanism for limiting the amount of CSI data (e.g. total number of candidate cell for CSI before cell switch) that can be stored.

To limit the data size of early CSI acquisition for candidate cells before the LTM cell switch command, the network (e.g., via serving cell 230) may configure a timer for each CSI report. The duration of the timer may be fixed, network configured subject to UE capabilities, etc. When CSI for a candidate cell is acquired at time t, a UE does not need to keep the CSI for more than a timer with duration T. And a UE is not required to report the acquired CSI after associated timer is expired.

To limit the data size of CSI acquisition for candidate cells before the LTM cell switch command, the network (e.g., via serving cell 230) may limit the amount of CSI acquisition that can be stored by device 205 before the LTM cell switch command, where the selected amount may be based on UE capability. In some cases, when the maximum limitation is reached, device 205 may keep (e.g., only keep) a portion of the acquired CSI data. In some cases, signaling from the network (e.g., via downlink control information (DCI) or MAC-CE) may be used to clear out at least a portion of the CSI stored by device 205 (e.g., based on age of each CSI, oldest discarded first; based on priority of each CSI, lowest priority discarded first, etc.). In some cases, CSI may be discarded based on age and/or priority.

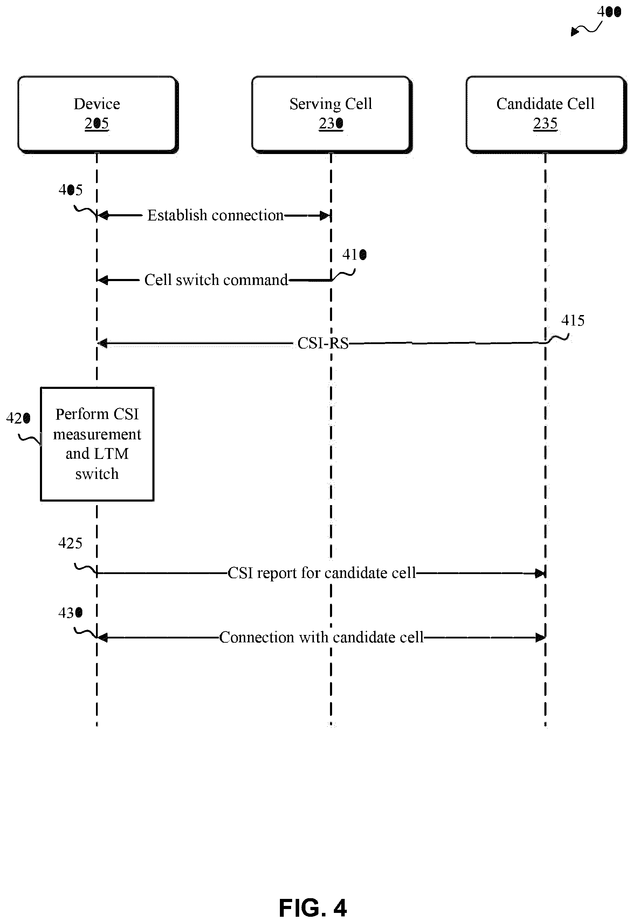

**FIG. 4** depicts a flow diagram illustrating an example system flow 400 associated with the disclosed systems, in accordance with example implementations described herein. In some cases, system flow 400 may depict an example timeline associated with CSI pre-acquisition (e.g., a second example timeline in addition to the timeline of system flow 300). For example, system flow 400 may depict another example timeline associated with CSI pre-acquisition. When the CSI report for a candidate cell is triggered by an LTM cell switch command, the CSI measurement may occur during cell switch or after cell switch. The depicted system flow 400 is just one implementation and one or more operations of system flow 400 may be rearranged, reordered, omitted, and/or otherwise modified such that other implementations are possible and contemplated.

At 405, a connection may be established between device 205 serving cell 230. For example, device 205 may establish a connection with serving cell 230 (e.g., based on RACH, etc.).

At 410, serving cell 230 may send a cell switch command to device 205. In some cases, the cell switch command may include information regarding candidate cell 235.

At 415, candidate cell 235 may provide CSI-RS to device 205. For example, before device 205 receives a cell switch command from serving cell 230, candidate cell 235 may provide CSI-RS to device 205.

At 420, device 205 may perform CSI measurement for candidate cell 235. For example, based on the CSI-RS received at 415, device 205 may perform CSI measurement for candidate cell 235. Also at 420, device 205 may switch from serving cell 230 to candidate cell 235. For example, based on the cell switch command, device 205 may perform an LTM switch to candidate cell 235.

At 425, device 205 may send a CSI measurement report to candidate cell 235. For example, based on the CSI measurement at 420, device 205 may determine the CSI report and send the CSI report to candidate cell 235.

At 430, a connection may be established between device 205 and candidate cell 235. For example, based on the CSI report sent at 425, device 205 may establish a connection with candidate cell 235.

A CSI measurement expected during cell switch can lead to increased cell switch delays. In some cases, the CSI report at 425 may be generated as early as possible after CSI measurement processing. When the CSI measurement is performed may be based on UE implementation. In some cases, the CSI report may be sent on a target cell's UL configured grant (CG) (e.g., UL CG of candidate cell 235) relatively soon after cell switch (e.g., immediately after cell switch). In some cases, the CSI report may be sent on a target cell's UL dynamic grant (DG) (e.g., UL DG of candidate cell 235) relatively soon after cell switch (e.g., immediately after cell switch). Additionally, or alternatively, the CSI report may be sent with an RRC reconfiguration complete message after cell switch. Additionally, or alternatively, when RACH-based LTM is used, the UE may choose to send CSI multiplexing via message 3, based on UE capability.

In some cases, based on UE capabilities, when the CSI RS for the CSI measurement in candidate cell(s) is configured and transmitted, a UE (e.g., device 205) may perform CSI measurement for candidate cell 235 before the report is triggered. The UE with this capability may benefit from shorter LTM cell switching delay compared to a UE without this capability.

For the CSI-RS in candidate cell(s) configured for CSI pre-acquisition, periodic or semipersistent CSI-RS may be used. In some cases, periodic or semipersistent CSI-RS may be used due to the relative difficulty in scheduling aperiodic CSI-RS (A-CSI-RS) (e.g., in a candidate cell from a source cell based on the two cells not being synchronized). Periodic CSI-RS may be activated after RRC configuration. Periodic CSI-RS for candidate cell(s) may be used without further modification.

For triggering semipersistent CSI-RS in a candidate cell, additional mechanism may be implemented. In some cases, the semipersistent CSI-RS for a candidate cell may be activated when one of the TCI-state configured in LTM TCI state list belonging to this candidate cell is activated. When a TCI-state in LTM TCI state list is activated, the candidate cell is likely to be the potential target cell.

Additionally, or alternatively, a MAC-CE for enabling triggering semipersistent CSI-RS in candidate cell may be implemented. With some systems MAC-CE activated semipersistent CSI-RS, the activation takes effect based on

$$n + 3N_{slot}^{subframe,\mu}$$

, where $\mu$ is the subcarrier spacing (SCS) configuration for the PUCCH carried the ACK of physical downlink shared channel (PDSCH) carried MAC CE. To compensate any potential misalignment between cells in relation to a MAC-CE triggering semipersistent CSI-RS in a candidate cell, the timeline for activation can be relaxed to

$$n + 3N_{slot}^{subframe,\mu} + \Delta_\mu$$

, where $\Delta_\mu$ is a configured value depending on SCS of candidate cell and subjecting to UE capability. Additionally, or alternatively, if the CSI acquisition is triggered by a MAC-CE cell switch command, semi-persistent CSI can be triggered at or relatively near the same time.

With conditional handover (CHO), the LTM implementation may be triggered by execution conditions related to signal strength and timing, rather than immediately upon receiving a cell switch command. The execution conditions may include signal strength (e.g., RSRP, RSRQ, or SINR) and/or timing conditions. In some cases, the signal strength condition may be satisfied when the signal strength of the target cell (e.g., candidate cell 235) exceeds a threshold relative to the serving cell (e.g., serving cell 230). The timing condition may be based on satisfying a time-to-execute period, conditioned upon the signal strength being continuously satisfied.

Conditional LTM may be implemented independent of a timeline (e.g., timeline of system flow 300, timeline of system flow 400). Instead, activation of conditional LTM for candidate cells may be based on one or more execution conditions. For example, an execution condition for activating conditional LTM may be based on an L1 measurement. In some cases, the execution condition for activating conditional LTM may be based on the activation of a TCI state in a candidate cell. Additionally, or alternatively, the execution condition of conditional LTM may be preconfigured and the UE (e.g., device 205) may start to evaluate the execution condition after the TCI state is activated. Additionally, or alternatively, the execution condition of conditional LTM may be based on the UE receiving a MAC-CE configured for activation of conditional LTM. Once the execution condition is satisfied, the UE may start (e.g., immediately start) the cell switch procedure to the candidate cell. Evaluation conditions of conditional HO (CHO) may be referred to as conditional events. For examples, condEventA3, condEventA4 and condEventA5 may be variations of Event A3, Event A4 and Event A5 with same definition of evaluation condition structure. The triggering conditions for these events may be based on L3 measurement. Since LTM may use L1 measurements, the triggering conditions may also be based on L1 measurements. The evaluation conditions may be based on the same or similar evaluation conditions that trigger an L1 measurement report, similar to the relationship between Event A4 and condEventA4.

Additionally, or alternatively, triggering conditions for conditional LTM may differ from the triggering conditions for LTM L1 measurement report. In such cases, when an L1 measurement report is triggered, the gNB may take additional action after evaluating the report. In the case of conditional LTM, once the triggering condition is fulfilled, the UE (e.g., device 205) may started (e.g., immediately start) the cell switch procedure to the candidate cell (e.g., candidate cell 235). The following Conditional LTM Event variations provide examples of possible reference RS in the serving cell and candidate cell in the execution conditions. For CondLTM-EventA3 variations, the reference on a serving primary cell (SpCell), which may include a primary cell within a cell group, encompassing both the PCell (Primary Cell) in the master cell group (MCG) and the PSCell (Primary Secondary Cell) in the secondary cell group (SCG). SpCell may include: Option 1: The current indicated beam in SpCell; or Option 2: Among the selection of beams in SpCell. With CondLTM-EventA3, the selection of beams can be directly indicated or configured, or derived from active states.

For CondLTM-EventA5 variations, the reference on SpCell may include: Option 1: the current indicated beam in SpCell; or Option 2: among the selection of beams in SpCell. With CondLTM-EventA5, the selection of beams can be directly indicated, preconfigured, or derived from active states. Also, for CondLTM-EventA5 variations, the reference on candidate cell may include: Option 1: one of the configured or indicated TCI state of candidate cell; or Option 2: the strongest beams in a group of selection of beam.

For CondLTM-EventA4 variations, the reference on candidate cell may include: Option 1: one of the configured or indicated TCI state of candidate cell; or Option 2: the strongest beams in a group of selection of beam.

Conditional LTM may include activation of condition trigger events. In legacy CHO, the conditional event may be activated (e.g., UE starts to evaluate execution conditions, once *RRCReconfiguration* associated with conditional Event is completed). Conditional LTM may follow a similar procedure.

Conditional LTM can include additional enhancements. In some scenarios, for improved resource allocation efficiency, the UE may start to evaluate execution conditions once all the RS are available. For example, when semipersistent CSI-RS is used as the reference signal performing L1 measurement, the conditional event for conditional LTM may be activated when all the associated RS are activated.

In some examples, when a single reference beam for evaluation for SpCell and another reference beam for candidate cell are associated with semipersistent CSI-RS and a CondLTM-EventA5 variation is configured, this event may be activated after the two associated CSI-RS are activated.

In some aspects, an L1 measurement on candidate cell may be performed after DL synchronization. When the UE has already acquired DL synchronization, the latency for the measurement may be significantly reduced. Therefore, based on conditional LTM, when all TCI-states involving in an event are activated, the conditional event can be configured first, and activated once all the TCI-states associated to reference beams in the event are activated.

In some examples, a conditional event may be activated explicitly by MAC-CE. Activating by MAC-CE can include conditional events being preconfigured by RRC and activated/deactivated by MAC-CE. Additionally, or alternatively, the configuration of conditional event may be indicated entirely by MAC-CE.

Conditional LTM may include preconfigured UE behavior after execution conditions are fulfilled. In the case of legacy CHO, the configuration of CHO candidate cell(s) and CHO execution conditions may be preconfigured on the UE. The UE may start evaluating execution conditions. When at least one CHO candidate cell satisfies the corresponding execution condition, the UE may detach from the serving cell and start the handover to the candidate cell.

Conditional LTM may replace legacy handover with an LTM cell switch. To perform LTM cell switch, information (e.g., all required information) of a target candidate cell may be configured or indicated to the UE before the cell switch. Since all the LTM resources are already configured, the additional information for conditional LTM may be provided in the LTM cell switch command (e.g., in the information content in LTM cell switch command).

In some cases, the LTM cell switch command may be a MAC CE. The LTM cell switch MAC-CE may include at least one of the following:

Target Configuration ID: this field indicates the index of candidate target configuration to apply for LTM cell switch, corresponding to *ltm-CandidateId* minus 1.

Timing Advance Command: this field indicates whether the TA is valid for the LTM target cell

TCI state ID: this field indicates and activates the TCI state for the LTM target cell. The TCI state is identified by *TCI-StateId* in *ltm-DL-OrJointTCI-StateToAddModList*. If the value of *unifiedTCI-State Type* in the *ltm-TCI-Info* of the configuration indicated by Target Configuration ID field is *joint,* this field is for joint TCI state, otherwise, this field is for downlink TCI state.

UL TCI state ID: this field indicates and activates the uplink TCI state for the LTM target cell (e.g., the SpCell of the target configuration indicated by the Target Configuration ID field). The UL TCI state is identified by *TCI-UL-StateId* in *ltm-UL-TCI-StatesToAddModList.* The octet containing this field (e.g., this field and the two reserved bits in the same octet) is included if the value of *unifiedTCI-StateType* in the *ltm-TCI-Info* of the configuration indicated by Target Configuration ID field is *separate.*

C: this field indicates the presence of the contention-free Random-Access Resources fields. If the value of this field is set to 1, the following fields are present: Random-Access Preamble index field, S/U field, SS/PBCH index field, PRACH Mask index field, Repetition number field and the reserved bits in the same octet. If the value of this field is set to 0, these fields are absent.

S/U: this field indicates which UL carrier to transmit the PRACH of the contention-free Random-Access Resources.

Random-Access Preamble index: this field indicates the Random-Access Preamble index of the contention-free Random-Access Resources.

SS/PBCH index: this field indicates the SS/PBCH that shall be used to determine the RACH occasion for the PRACH transmission of the contention-free Random-Access Resources.

PRACH Mask index: this field indicates the RACH occasion(s) associated with the SS/PBCH indicated by 'SS/PBCH index' for the PRACH transmission of the contention-free Random-Access Resources.

Repetition number: this field indicates the Msg1 repetition number to be applied to the contention-free Random-Access.

Among all content, "Target Configuration ID" is used for the identification of candidate cell. All the relative field for Random-Access (C, S/U, Random-Access Preamble index, SS/PBCH index, PRACH Mask index, Repetition number) are available when contention free Random-Access is used for switching to corresponding candidate cell. These are the parameters can be part of the conditional LTM configurations.

The remaining two are TCI indication (TCI state ID/ UL TCI state ID) and time advance information (TA command). Given the dynamic nature of these two paramters, preconfigured value may be already out of date when the conditional LTM is triggered. In the following, we will focus on some potential enhancememts about these two information.

Aspects of conditional LTM may be based on time advance (TA). Early UL synchronization for candidate cell is one of the enhancements of LTM. UL synchronization for candidate cell can come with multiple methods, including: PDCCH order based TA acquisition, RACH less Handover, or UE base TA measurement.

Except for UE-based TA measurement, the network may maintain the TA and control all the TA timers. At the time of LTM cell switching command, the gNB may determine if the TA is available and may include it in LTM cell switching command. The UE may determine to perform RACH based or RACH-less LTM based on the availability of TA in the cell switching command.

For UE-based TA measurement, the availability of TA at the time of cell switching is based on the UE. If the UE already acquires the TA before the cell switch command, RACH-less LTM may be performed. Otherwise, RACH-based LTM may be performed.

With conditional LTM, since there are no LTM cell switching commands, TA information may be provided by other means. The following options are potential solutions:

Option 1: Support RACH-based (e.g., only support RACH-based) LTM for conditional LTM, except for the UE supporting UE-based TA measurement. For UEs not supporting UE-based TA measurement, support (e.g., only support) RACH-based LTM for conditional LTM since TA may not available. For UEs supporting UE-based TA measurement, the UE may perform RACH or RACH-less LTM based on the availability of TA at the time associated executed conditions are satisfied.

Option 2: TA is preconfigured in associated conditional LTM configuration. For UEs not supporting UE-based TA measurement, similar to cell switch command MAC-CE, if the TA is configured for particular conditional LTM configuration, RACH-less LTM may be performed. Otherwise, RACH-based LTM is performed. For UEs supporting UE-based TA measurement, the UE may perform RACH or RACH-less LTM based on the availability of TA at the time associated executed conditions are satisfied.

Option 3: TA for a candidate cell can be updated by new MAC CE. In this case, TA for a given candidate cell may or may not provide in RRC, but it can be indicated or updated by MAC CE. A TA timer may restart after the TA value is updated, including initial value provided in RRC. TA may become invalid after the timer is expired. The UE may perform RACH-less or RACH based LTM based on availability of TA when the executed condition is satisfied.

Option 4 (e.g., Option 3 with additional TA timer): a TA timer is defined with valid time duration (e.g., valid time can be forever with specific predefined value). For UEs not supporting UE-based TA measurement, similar to cell switch command MAC-CE, if the TA is configured for particular conditional LTM configuration, perform RACH-less LTM, otherwise, a timer starts relative to the *RRCReconfiguration* associated with conditional LTM. If the timer is not expired at the time of cell switch, perform RACH-less based LTM with configured TA, otherwise, perform RACH based LTM. For UEs supporting UE-based TA measurement, the UE may perform RACH or RACH-less LTM based on the availability of TA at the time associated executed conditions are satisfied.

In some cases, conditional LTM may be based on TCI indication (e.g., TCI state ID, UL TCI state ID). LTM beam indication can follow the Unified TCI framework. A TCI state may be configured, activated/deactivated, or indicated by a jointed DL/UL state or a pair of DL/UL TCI states. Conditional LTM may support multiple TCI states activated before command, and indicate one of them in an LTM cell switch command. In some cases, a TCI state that is activated and indicated simultaneously in LTM cell switch command may be supported.

In some cases, the Target TCI state may be the indicated TCI state in a candidate cell during LTM cell switch. With conditional LTM, based on L1 measurements being associated to beams is more dynamic in time, the "best" TCI state in a candidate cell may change during the evaluation period. The following options are potential solutions:

Option 1: Target TCI state is preconfigured in RRC. However, the preconfigured TCI state may be outdated when execution condition satisfied.

Option 2: Target TCI state is preconfigured in RRC, but may be updated by MAC-CE. A conditional LTM MAC-CE may update the preconfigured target TCI-state in a conditional LTM configuration. This MAC-CE may also update Target Configuration ID if the change of target TCI-state involving change of candidate cell.

Option 3: Target TCI state(s) is/are determined based on execution conditions preconfigured in RRC. Multiple conditional events can be configured for a given candidate cell with different target TCI states. The TCI state after cell switch is determined by which TCI state trigger the associated conditional event. Additionally, or alternatively, a conditional event with multiple target TCI states may be used, where each target TCI state may have a different executive condition. With this approach, a target configuration ID may also be determined based on different conditions like TCI state.

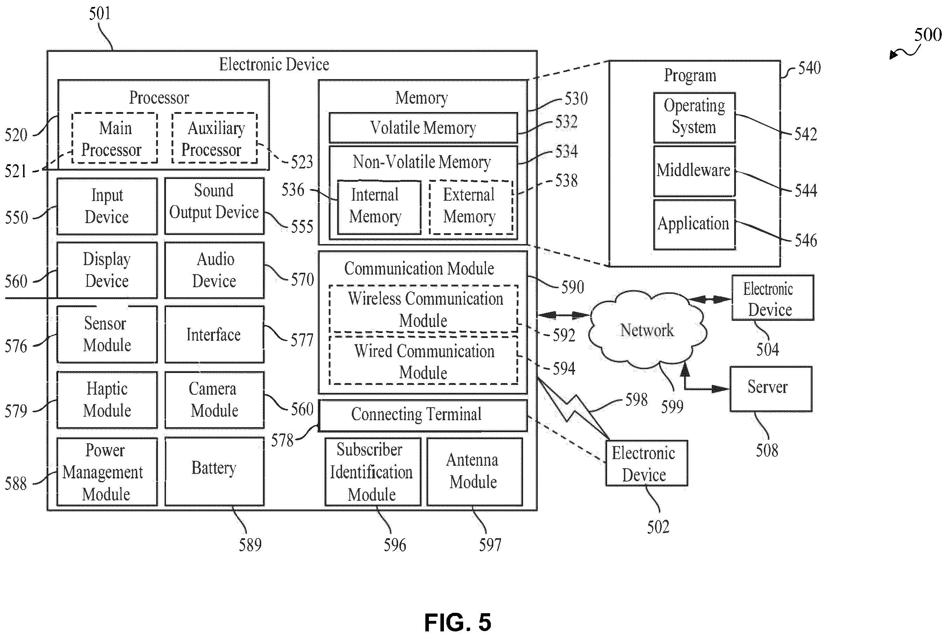

Additional UE capabilities may be provided based on conditional LTM. For example, a UE may be configured to maintain TA timer(s) during LTM. In some cases, a UE may be configured to report supported maximum of TA timer during conditional LTM. Additionally, or alternatively, a UE may be configured to support updating target TCI state(s) during conditional LTM via MAC-CE. **FIG. 5** depicts a block diagram of an electronic device in a network environment 500, according to embodiments described herein. Network environment 500 (e.g., one or more components of network environment 500) may provide CSI-RS-based L1 measurement for L1/L2 triggered mobility (LTM).

Referring to FIG. 5, an electronic device 501 in a network environment 500 may communicate with an electronic device 502 via a first network 598 (e.g., a short-range wireless communication network), or an electronic device 504 or a server 508 via a second network 599 (e.g., a long-range wireless communication network). The electronic device 501 may communicate with the electronic device 504 via the server 508. The electronic device 501 may include a processor 520, a memory 530, an input device 550, a sound output device 555, a display device 560, an audio module 570, a sensor module 576, an interface 577, a haptic module 579, a camera module 580, a power management module 588, a battery 589, a communication module 590, a subscriber identification module (SIM) card 596, or an antenna module 597. In one embodiment, at least one (e.g., the display device 560 or the camera module 580) of the components may be omitted from the electronic device 501, or one or more other components may be added to the electronic device 501. Some of the components may be implemented as a single integrated circuit (IC). For example, the sensor module 576 (e.g., a fingerprint sensor, an iris sensor, or an illuminance sensor) may be embedded in the display device 560 (e.g., a display).

The processor 520 may execute software (e.g., a program 540) to control at least one other component (e.g., a hardware or a software component) of the electronic device 501 coupled with the processor 520 and may perform various data processing or computations.

As at least part of the data processing or computations, the processor 520 may load a command or data received from another component (e.g., the sensor module 576 or the communication module 590) in volatile memory 532, process the command or the data stored in the volatile memory 532, and store resulting data in non-volatile memory 534. The processor 520 may include a main processor 521 (e.g., a central processing unit (CPU) or an application processor (AP)), and an auxiliary processor 523 (e.g., a graphics processing unit (GPU), an image signal processor (ISP), a sensor hub processor, or a communication processor (CP)) that is operable independently from, or in conjunction with, the main processor 521. Additionally, or alternatively, the auxiliary processor 523 may be adapted to consume less power than the main processor 521, or execute a particular function. The auxiliary processor 523 may be implemented as being separate from, or a part of, the main processor 521.

The auxiliary processor 523 may control at least some of the functions or states related to at least one component (e.g., the display device 560, the sensor module 576, or the communication module 590) among the components of the electronic device 501, instead of the main processor 521 while the main processor 521 is in an inactive (e.g., sleep) state, or together with the main processor 521 while the main processor 521 is in an active state (e.g., executing an application). The auxiliary processor 523 (e.g., an image signal processor or a communication processor) may be implemented as part of another component (e.g., the camera module 580 or the communication module 590) functionally related to the auxiliary processor 523.

The memory 530 may store various data used by at least one component (e.g., the processor 520 or the sensor module 576) of the electronic device 501. The various data may include, for example, software (e.g., the program 540) and input data or output data for a command related thereto. The memory 530 may include the volatile memory 532 or the non-volatile memory 534. Non-volatile memory 534 may include internal memory 536 and/or external memory 538.

The program 540 may be stored in the memory 530 as software, and may include, for example, an operating system (OS) 542, middleware 544, or an application 546.

The input device 550 may receive a command or data to be used by another component (e.g., the processor 520) of the electronic device 501, from the outside (e.g., a user) of the electronic device 501. The input device 550 may include, for example, a microphone, a mouse, or a keyboard.

The sound output device 555 may output sound signals to the outside of the electronic device 501. The sound output device 555 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 560 may visually provide information to the outside (e.g., a user) of the electronic device 501. The display device 560 may include, for example, a display, a hologram device, or a projector and control circuitry to control a corresponding one of the display, hologram device, and projector. The display device 560 may include touch circuitry adapted to detect a touch, or sensor circuitry (e.g., a pressure sensor) adapted to measure the intensity of force incurred by the touch.

The audio module 570 may convert a sound into an electrical signal and vice versa. The audio module 570 may obtain the sound via the input device 550 or output the sound via the sound output device 555 or a headphone of an external electronic device 502 directly (e.g., wired) or wirelessly coupled with the electronic device 501.

The sensor module 576 may detect an operational state (e.g., power or temperature) of the electronic device 501 or an environmental state (e.g., a state of a user) external to the electronic device 501, and then generate an electrical signal or data value corresponding to the detected state. The sensor module 576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 577 may support one or more specified protocols to be used for the electronic device 501 to be coupled with the external electronic device 502 directly (e.g., wired) or wirelessly. The interface 577 may include, for example, a high- definition multimedia interface (HDMI), a universal serial bus (USB) interface, a secure digital (SD) card interface, or an audio interface.

A connecting terminal 578 may include a connector via which the electronic device 501 may be physically connected with the external electronic device 502. The connecting terminal 578 may include, for example, an HDMI connector, a USB connector, an SD card connector, or an audio connector (e.g., a headphone connector).

The haptic module 579 may convert an electrical signal into a mechanical stimulus (e.g., a vibration or a movement) or an electrical stimulus which may be recognized by a user via tactile sensation or kinesthetic sensation. The haptic module 579 may include, for example, a motor, a piezoelectric element, or an electrical stimulator.

The camera module 580 may capture a still image or moving images. The camera module 580 may include one or more lenses, image sensors, image signal processors, or flashes. The power management module 588 may manage power supplied to the electronic device 501. The power management module 588 may be implemented as at least part of, for example, a power management integrated circuit (PMIC).

The battery 589 may supply power to at least one component of the electronic device 501. The battery 589 may include, for example, a primary cell which is not rechargeable, a secondary cell which is rechargeable, or a fuel cell.

The communication module 590 may support establishing a direct (e.g., wired) communication channel or a wireless communication channel between the electronic device 501 and the external electronic device (e.g., the electronic device 502, the electronic device 504, or the server 508) and performing communication via the established communication channel. The communication module 590 may include one or more communication processors that are operable independently from the processor 520 (e.g., the AP) and supports a direct (e.g., wired) communication or a wireless communication. The communication module 590 may include a wireless communication module 592 (e.g., a cellular communication module, a short-range wireless communication module, or a global navigation satellite system (GNSS) communication module) or a wired communication module 594 (e.g., a local area network (LAN) communication module or a power line communication (PLC) module). A corresponding one of these communication modules may communicate with the external electronic device via the first network 598 (e.g., a short-range communication network, such as BLUETOOTH™, wireless-fidelity (Wi-Fi) direct, or a standard of the Infrared Data Association (IrDA)) or the second network 599 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 592 may identify and authenticate the electronic device 501 in a communication network, such as the first network 598 or the second network 599, using subscriber information (e.g., international mobile subscriber identity (IMSI)) stored in the subscriber identification module 596.

The antenna module 597 may transmit or receive a signal or power to or from the outside (e.g., the external electronic device) of the electronic device 501. The antenna module 597 may include one or more antennas, and, therefrom, at least one antenna appropriate for a communication scheme used in the communication network, such as the first network 598 or the second network 599, may be selected, for example, by the communication module 590 (e.g., the wireless communication module 592). The signal or the power may then be transmitted or received between the communication module 590 and the external electronic device via the selected at least one antenna.

Commands or data may be transmitted or received between the electronic device 501 and the external electronic device 504 via the server 508 coupled with the second network 599. Each of the electronic devices 502 and 504 may be a device of a same type as, or a different type, from the electronic device 501. All or some of the operations to be executed at the electronic device 501 may be executed at one or more of the external electronic devices 502, 504, or 508. For example, if the electronic device 501 should perform a function or a service automatically, or in response to a request from a user or another device, the electronic device 501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 501. The electronic device 501 may provide the outcome, with or without further processing of the outcome, as at least part of a reply to the request. To that end, a cloud computing, distributed computing, or client-server computing technology may be used, for example.

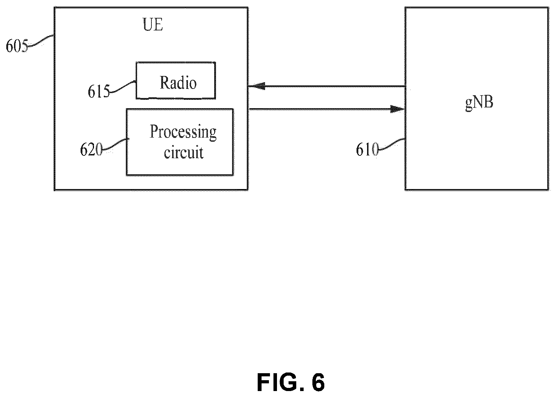

**FIG. 6** shows a system including a UE 605 and a gNB 610, in communication with each other. The UE may include a radio 615 and a processing circuit (or a means for processing) 620, which may perform various methods disclosed herein, e.g., the method illustrated in FIG. 1. For example, the processing circuit 620 may receive, via the radio 615, transmissions from the network node (gNB) 610, and the processing circuit 620 may transmit, via the radio 615, signals to the gNB 610.

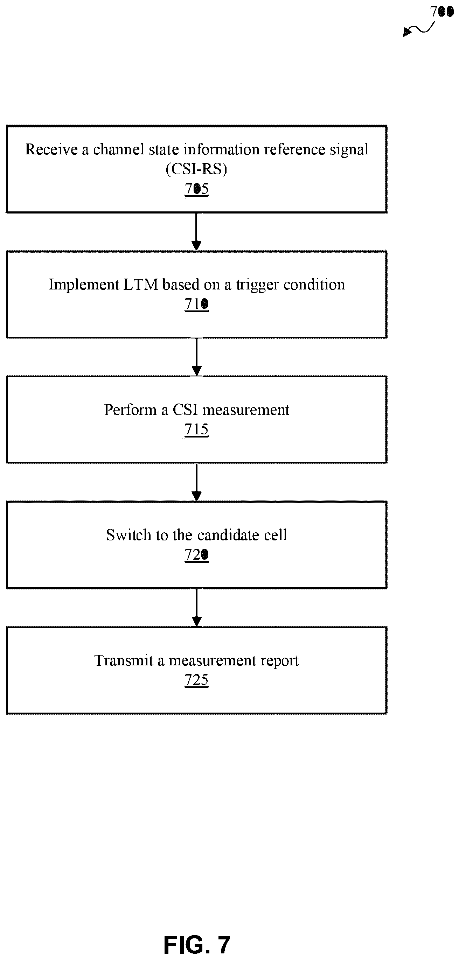

**FIG. 7** depicts a flow diagram illustrating an example method 700 associated with the disclosed systems, in accordance with example implementations described herein. In some configurations, one or more aspects of method 700 may be implemented by or in conjunction with device 105, components of device 105, or any combination thereof. Additionally, or alternatively, one or more aspects of method 700 may be implemented by or in conjunction with device 205, components of device 205, or any combination thereof. Additionally, or alternatively, one or more aspects of method 700 may be implemented by or in conjunction with network environment 500, components of network environment 500, or any combination thereof. Additionally, or alternatively, one or more aspects of method 700 may be implemented by or in conjunction with UE 600, components of UE 600, or any combination thereof. The depicted method 700 is just one implementation and one or more operations of method 700 may be rearranged, reordered, omitted, and/or otherwise modified such that other implementations are possible and contemplated.

At 705, method 700 may include receiving a channel state information reference signal (CSI-RS). For example, method 700 may include receiving, from a candidate cell by a user equipment (UE), a channel state information reference signal (CSI-RS).

At 710, method 700 may include implementing LTM based on a trigger condition. For example, method 700 may include implementing layer 1/layer 2 (L1/L2) triggered mobility (LTM) based on identifying a trigger condition, the trigger condition being based on a message received from a serving cell.

At 715, method 700 may include performing a CSI measurement. For example, method 700 may include performing a CSI measurement for the candidate cell.

At 720, method 700 may include switching to the candidate cell. For example, method 700 may include switching to the candidate cell based on the CSI measurement and on receiving a cell switch command from the serving cell.

At 725, method 700 may include transmitting a measurement report. For example, method 700 may include transmitting a measurement report to the candidate cell based on switching to the candidate cell.

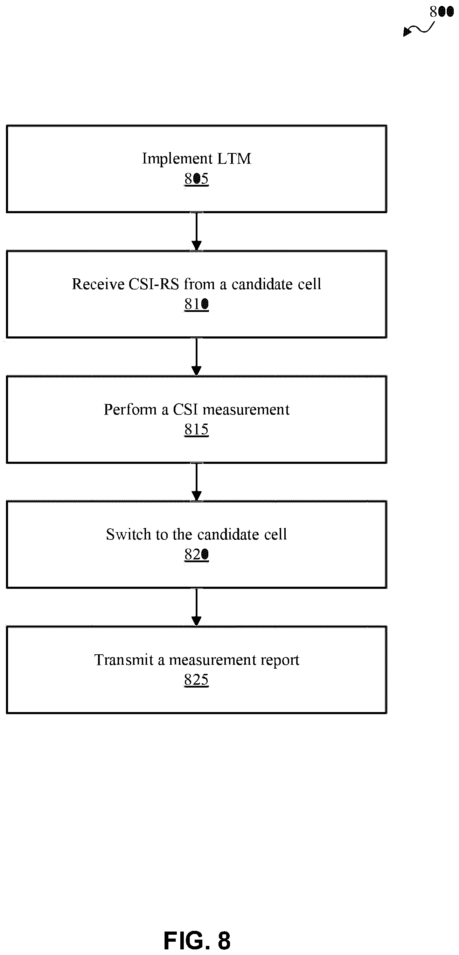

**FIG. 8** depicts a flow diagram illustrating an example method 800 associated with the disclosed systems, in accordance with example implementations described herein. In some configurations, one or more aspects of method 800 may be implemented by or in conjunction with device 105, components of device 105, or any combination thereof. Additionally, or alternatively, one or more aspects of method 800 may be implemented by or in conjunction with device 205, components of device 205, or any combination thereof. Additionally, or alternatively, one or more aspects of method 800 may be implemented by or in conjunction with network environment 500, components of network environment 500, or any combination thereof. Additionally, or alternatively, one or more aspects of method 800 may be implemented by or in conjunction with UE 600, components of UE 600, or any combination thereof. The depicted method 800 is just one implementation and one or more operations of method 800 may be rearranged, reordered, omitted, and/or otherwise modified such that other implementations are possible and contemplated.

At 805, method 800 may include implementing layer 1/layer 2 (L1/L2) triggered mobility (LTM). For example, at 805, method 800 may include implementing LTM based on receiving a cell switch command from a serving cell.

At 810, method 800 may include receiving CSI-RS from a candidate cell. For example, method 800 may include receiving, from a candidate cell by a user equipment (UE), a CSI-RS. For example, method 800 may include performing a CSI measurement for the candidate cell based on the cell switch command from the serving cell.

At 815, method 800 may include performing a CSI measurement. For example, method 800 may include switching to the candidate cell based on the CSI measurement.

At 820, method 800 may include switching to the candidate cell.

For example, at 825, method 800 may include transmitting a measurement report to the candidate cell based on switching to the candidate cell.

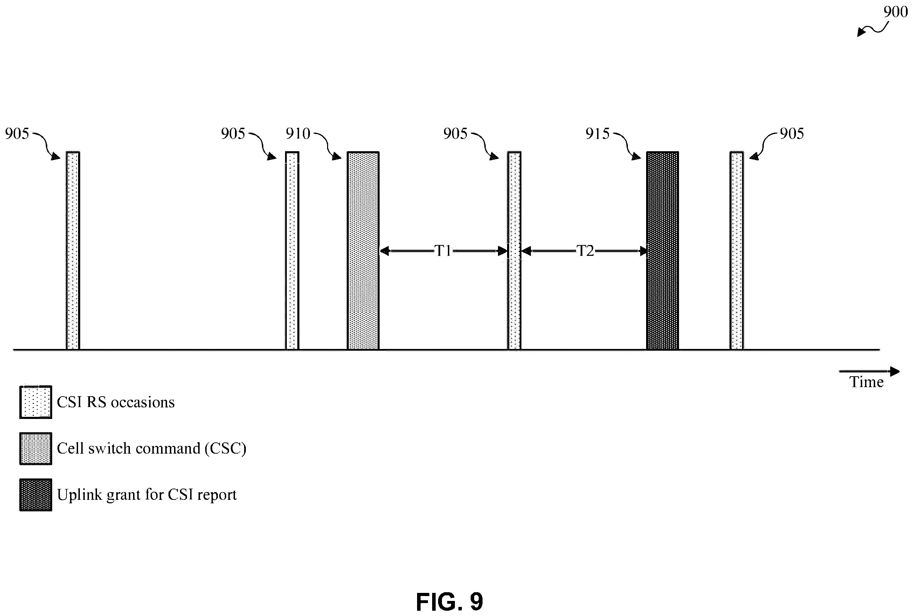

**FIG. 9** illustrate a timeline 900 illustrating example events associated with the disclosed systems, in accordance with example implementations described herein. In particular, timeline 900 depicts aspects associated with a CSI measurement after a cell switch command (CSC). Timeline 900 may depict a timeline of CSI processing for LTM CSI pre-acquisition.

In the illustrated example, timeline 900 depicts one or more CSI RS occasions 905, CSC 910, and an uplink grant 915 for a CSI report. CSI RS occasions 905 may include periodic CSI RS occasions and/or semi-persistent CSI RS occasions. As shown, timeline 900 depicts time period T1, which includes the time between CSC 910 and the first CSI RS occasion 905 after CSC 910. Also, timeline 900 depicts time period T2, which includes the time between the first CSI RS occasion 905 after CSC 910 and uplink grant 915.

CSI pre-acquisition reporting during LTM can have the nature of aperiodic CSI reporting based on CSI measurement of periodic and/or semipersistent CSI-RS. Timeline 900 may be based on similar principles as an aperiodic CSI report on periodic/semipersistent CSI-RS. However, at least one difference may be based on how CSI-RS report is triggered. In aperiodic CSI-report for the serving cell, the report may be triggered by DCI. With CSI pre-acquisition reporting to the target cell during LTM, when CSI measurement is after CSC 910, the trigger mechanism is based on CSC 910. CSC 910 may be a MAC-CE. For CSI measurement before CSC, the starting point of CSI measurement may start after the measurement trigger point (e.g. after triggering MAC-CE command or the activation command on associated TCI-state).

With an aperiodic CSI report on periodic/semipersistent CSI-RS for serving cell, uplink grant 915 for CSI reporting may be a UCI over PUSCH scheduled by a DCI triggering the report. Thus, a gNB may have full control on both timing of the report occasion and the occasions of periodic/semipersistent CSI-RS(s).

In some cases, the gNB may configure the timing of CSI report and associated CSI-RS to ensure the UE has sufficient processing time for CSI reporting. A CSI-processing timeline for CSI-report may be defined by time constraints quantities Z and Z', where Z' is the time between a CSI resource and the CSI report, and Z is the time between the DCI requesting the report and CSI report.

For aperiodic CSI reports on aperiodic CSI-RS, the UE may not send or update CSI if the time between the DCI and the report is less than Z, or if the time duration between the CSI-RS resource and the report is less than Z'.

For aperiodic CSI reports on periodic/semipersistent CSI-RS, Z (e.g., only Z) may be applicable. In some cases, the UE may measure previous CSI-RS resource when the time between the latest CSI-RS resource to CSI report is less than Z'. In some cases, the UE may proactively measure the periodic/semipersistent CSI-RS before the aperiodic CSI-report is triggered and scheduled.

For CSI process timeline for CSI report for CSI pre-acquisition, multiple aspects may be considered. First, period/semipersistent CSI-RS for candidate CSI measurement may be transmitted by candidate cells so these cells know the exact times of CSI-RS. On the other hand, a cell switch command (CSC) for triggering LTM may be transmitted by a serving cell, where the target cell may not know the exact time the CSC is transmitted (e.g., not like CSI report in serving cell). In some cases, the gNB may not have full control to ensure available processing time for UE to calculate CSI early measurement for target cell. The UE may indicate the validation of CSI based on the time instant of CSI-RS, uplink occasion of CSI report, and/or CSI processing timeline. When the UE does not have time to process the CSI before the CSI-report occasion, the UE may report out of range (e.g., lowest index of CQI) for the report. In some cases, uplink grant 915 for CSI reporting may be based on the systems and methods described herein (e.g. uplink grant scheduled by RAR, first UL grant after connection, etc.).

With timeline 900, the CSI measurement starts after receiving CSC 910. The UE is not expected to measure any CSI-RS resource whose last symbol is received within Z' symbols before the CSI report. For a CSI-RS resource instant that may be measured to calculate valid CSI, the time between the last symbol of CSI-RS resource and beginning of CSI report (e.g., T2 in timeline 900) may be larger than Z' symbols, where the value of Z' may follow the legacy values for CSI-processing timeline. When timeline 900 is applicable, the UE may not report valid CSI when no CSI-RS occasion after CSC 910 whose ending symbol is received Z' symbols before the CSI report.

In some cases, a UE may spend some amount of time to process CSC 1010 in order to recognize which target cell to switch to and for the associated CSI to be reported. When the UE behavior on early CSI measurement is to do nothing (e.g., not measuring CSI for any candidate cell) until receiving CSC 1010, the UE uses some amount of time to process the CSC 1010 before performing a CSI measurement. Thus, the time duration between the end of CSC 1010 and beginning of CSI-RS resource to be measured (e.g., T1 in timeline 900) may be larger than some time gap. The time gap may follow a MAC-CE process timeline $3N_{slot}^{subframe,\mu} + \Delta'_{\mu}$, where $N_{slot}^{subframe,\mu}$, where a number of slots per subframe for subcarrier spacing configuration $\mu$ and $\Delta'_{\mu}$ is an application specific offset value depending on the subcarrier spacing (SCS) of the serving cell. Additionally, or alternatively, the time gap may be some new specified value $Z_{earlyCSI}$. This value may be based on a UE capability report. When this timeline is applicable, which could be based on UE capability, the UE may not report (e.g., is not constrained to report) valid CSI when no CSI-RS occasion after CSC 910 satisfies at least one of the following conditions: (a) ending symbol of CSI resource is received Z' symbols before the CSI report; and/or (b) the starting symbol of CSI resource is after a time gap after the end symbol of CSC. In some cases, the time gap can be either new specified value $Z_{earlyCSI}$ or modified MAC-CE timeline $3N_{slot}^{subframe,\mu} + \Delta'_{\mu}$, where $\Delta'_{\mu}$ is a SCS dependent offset.

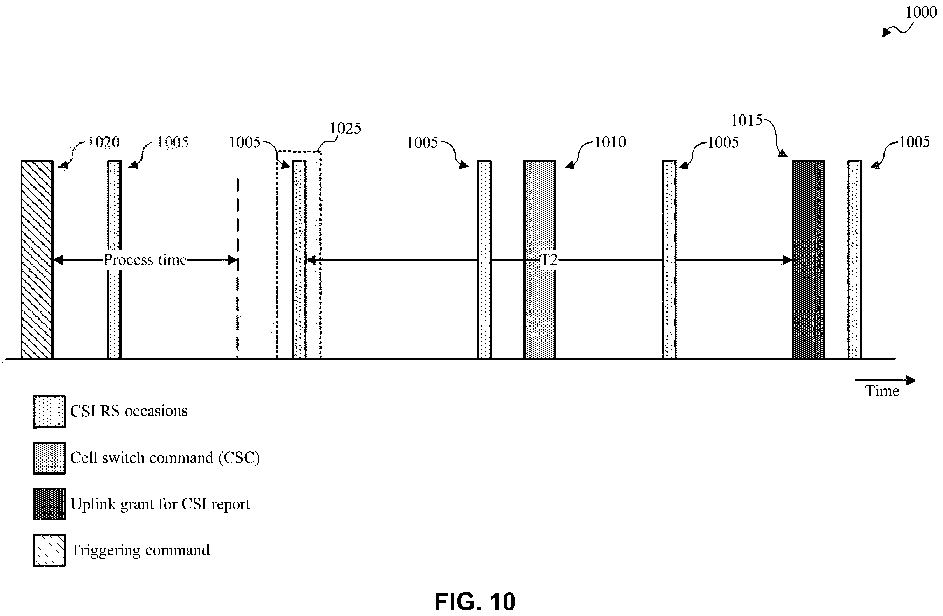

**FIG. 10** illustrate a timeline 1000 illustrating example events associated with the disclosed systems, in accordance with example implementations described herein. In particular, timeline 1000 depicts aspects associated with a timeline of CSI measurement started before a cell switch command (CSC).

In the illustrated example, timeline 1000 depicts one or more CSI RS occasions 1005, CSC 1010, an uplink grant 1015 for a CSI report, triggering command 1020, and CSI-RS 1025. CSI RS occasions 1005 may include periodic CSI RS occasions and/or semi-persistent CSI RS occasions. As shown, timeline 1000 may depict a processing time, which may include a period of time or time taken to process triggering command 1020. CSI-RS 1025 may be the first CSI-RS following the process time (e.g., following triggering command 1020).

Timeline 1000 may depict a CSI measurement started before CSC 1010. In this case, the UE may be configured to measure CSI before receiving CSC 1010. In some cases, the UE may start measuring CSI after some time instant after triggering command 1020. In some cases, triggering command 1020 may include a TCI activation command. The UE may start to measure CSI for a candidate cell after associated TCI state for this candidate cell is activated. The first CSI resource to be measured may be after some time gap after the TCI activation command (e.g., after triggering command 1020). This time gap may follow a MAC-CE process timeline $3N_{slot}^{subframe,\mu} + \Delta''_{\mu}$, where $N_{slot}^{subframe,\mu}$ is number of slots per subframe for subcarrier spacing configuration $\mu$ and $\Delta''_{\mu}$ is application specific offset value depending on SCS of serving cell. Additionally, or alternatively, the time gap may be some specified value $Z_{earlyCSI}$, (e.g., this value may be based on a UE capability report). The time between a CSI-RS time occasion and a PUSCH transmitted CSI report may be (e.g., should be) larger than Z'. Thus, the UE may report (e.g., is only required to report) valid CSI when at least one measurement CSI-RS associated with the CSI report is after some time gap after triggering command 1020, and the time between this CSI-RS occasion and PUSCH carrying the CSI report is larger than Z'.

In some cases, when to start measure CSI measurement may be based on UE implementation. The UE may report valid CSI when (e.g., only when) at least one measurement CSI-RS associated with the CSI report and the time gap between the CSI-RS occasion and PUSCH carrying the CSI report is larger than Z'.

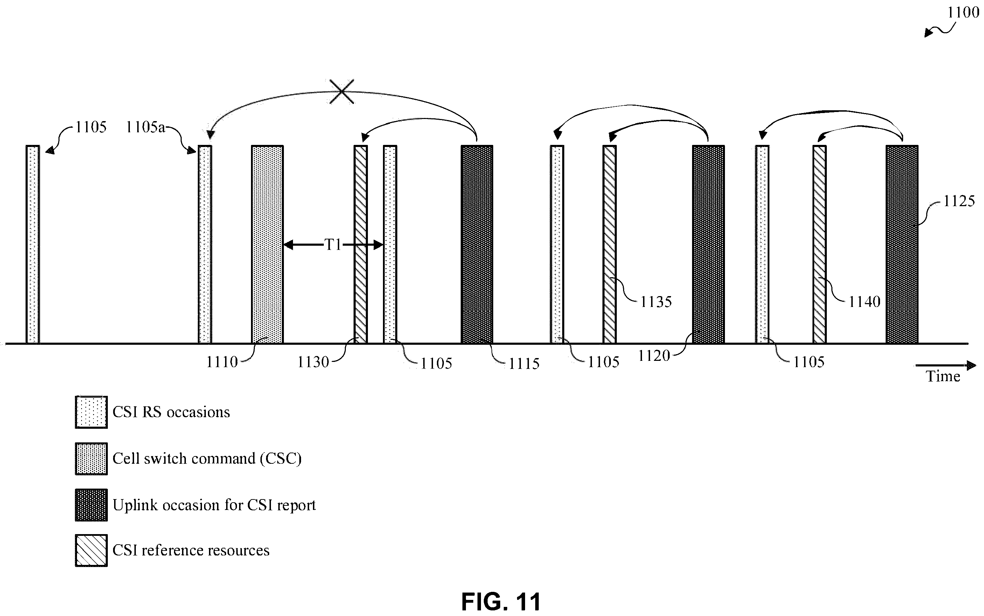

**FIG. 11** illustrate a timeline 1100 illustrating example events associated with the disclosed systems, in accordance with example implementations described herein. In particular, timeline 1100 depicts aspects associated with a CSI measurement started after a cell switch command (CSC) for a periodic or semipersistent CSC.

In the illustrated example, timeline 1100 depicts one or more CSI RS occasions 1105, CSC 1110, uplink occasion 1115 for CSI reporting, uplink occasion 1120 for CSI reporting, uplink occasion 1125 for CSI reporting, CSI reference resource 1130, CSI reference resource 1135, and CSI reference resource 1140. The depicted uplink occasions may depict CSI report uplink occasions. In some cases, uplink occasion 1115 may be a first uplink occasion for CSI reporting (e.g., first uplink occasion after CSC 1110). In some cases, uplink occasion 1115 may be an invalid CSI. In some cases, uplink occasion 1120 may be a second uplink occasion for CSI reporting (e.g., second uplink occasion after CSC 1110). In some cases, uplink occasion 1120 may be a valid CSI. In some cases, uplink occasion 1125 may be a third uplink occasion for CSI reporting (e.g., third uplink occasion after CSC 1110). In some cases, uplink occasion 1125 may be a valid CSI.

Timeline 1100 may depict periodic/semipersistant CSI report(s) for a candidate cell. Timeline 1100 may depict a CSI processing timeline for a variation of CSI pre-acquisition for candidate cell(s), where a UE continues sending updated CSI to a gNB periodically. Thus, timeline 1100 may depict periodic or semipersistent CSI reporting for a candidate cell, where a given uplink occasion (e.g., uplink occasion 1115) may be PUSCH or PUCCH. As shown, a first uplink occasion (e.g., uplink occasion 1115) may occur after CSC 1110, and subsequent uplink occasions may appear periodically (e.g., uplink occasion 1120, uplink occasion 1125) until deactivated.

With some CSI-report processing timelines for periodic/semipersistent reporting, the CPU occupation is from a first symbol of the earliest CSI-RS occasion (e.g., no later than the corresponding CSI reference resource) until the last symbol of the configured PUSCH/PUCCH carrying CSI report. This can imply that the current CSI in a CSI report includes (e.g., should include) information based on the measurement of latest CSI-RS occasion no later than the CSI reference resource.

In relation to uplink occasion 1115, a processing time to calculate CSI may be based on a CSI-RS occasion 1105 (a) after CSC 1110 and (b) before a CSI reference resource 1130. As shown, CSI-RS occasion 1105a occurs before CSC 1110. Thus, the UE may report "invalid CSI: in uplink occasion 1115. When timeline 1100 is applicable, the UE may not report valid CSI in a CSI report occasion when no CSI-RS occasion after CSC 1110 whose ending symbol is received before the CSI reference resource associated with the CSI report occasion. Based on timeline 1100, the UE may not report valid CSI in uplink occasion 1115 since the first available CSI resource after CSC 1110 arrives after CSI reference resource 1130.

Starting with uplink occasion 1120 (e.g., the second uplink occasion), the UE is expected to report valid CSI since CSI resources are available after CSC 1110 and before valid CSI reference resources (e.g., CSI reference resource 1135, CSI reference resource 1140).

Similar to aperiodic report cases, a timeline to consider is the time for a UE to process CSC in order to recognize the target cell so as the associated CSI to be reported. Therefore, the time duration between the end of CSC and beginning of CSI-RS resource to be measured (T1 in Figure 7) should be larger than some time gap.

In some cases, the time gap may follow a MAC-CE process timeline $3N_{slot}^{subframe,\mu} + \Delta'_{\mu}$, where

$N_{slot}^{subframe,\mu}$ is the number of slots per subframe for subcarrier spacing configuration $\mu$ and $\Delta'_{\mu}$ is application specific offset value depending on SCS of serving cell. Additionally, or alternatively, the time gap could be some new specified value $Z_{earlyCSI}$ (e.g., value based on UE capability). When this timeline is applicable, which can be based on UE capability, the UE may not report valid CSI when no CSI-RS occasion after CSC satisfies the following two conditions: ending symbol of CSI resource is received before CSI reference resource associated with the CSI report occasion; and the starting symbol of CSI resource is after a time gap after the end symbol of CSC. A time gap can be either new specified value $Z_{earlyCSI}$ or modified MAC-CE timeline $3N_{slot}^{subframe,\mu} + \Delta'_{\mu}$, where $\Delta'_{\mu}$ is a SCS dependent offset.

For CSI measurement started before CSC, the UE may be configured to measure CSI before receiving CSC 1110.The UE may start measuring CSI after a certain time after a triggering command (e.g., TCI activation command). In some cases, the UE may start to measure CSI for a candidate cell after associated TCI state for this candidate cell is activated. The first CSI resource to be measured may be after some time gap after the TCI activation command. This time gap may follow a MAC-CE process timeline $3N_{slot}^{subframe,\mu} + \Delta''_{\mu}$, where $N_{slot}^{subframe,\mu}$ is a number of slots per subframe for subcarrier spacing configuration $\mu$ and $\Delta''_{\mu}$ is application specific offset value depending on SCS of serving cell. Additionally, or alternatively, the time gap could be some new specified value $Z_{earlyCSI'}$ (e.g., as value that may be based on a UE capability report). The time between the CSI-RS occasion and the CSI report occasions may be (e.g., should be) larger than Z'. Therefore, the UE may report valid CSI if at least one measurement CSI-RS associated with the CSI report, which may be after some time gap after the triggering command, and the CSI-RS occasion may be before the CSI reference resource associated with the CSI report. When to start measure CSI measurement may be up to UE implementation, where the UE reports valid CSI when at least one CSI-RS occasion to be measured is before the CSI reference resource associated with the CSI report.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively, or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

**Claims**

1. A method (700) comprising:

   receiving (705), by a user equipment, UE (105, 205), a channel state information reference signal, CSI-RS, from a candidate cell (235);
   implementing (710) layer 1/layer 2, L1/L2, triggered mobility, LTM, based on identifying a trigger condition, the trigger condition being based on a message received from a serving cell (230);
   performing (715) an L1 measurement of the CSI-RS from the candidate cell (235);
   switching (720) to the candidate cell (235) based on the L1 measurement and on receiving a cell switch command from the serving cell (230); and
   transmitting (725) a measurement report to the candidate cell (235) based on the L1 measurement and based on switching to the candidate cell (235).

2. The method (700) of claim 1, wherein the trigger condition for the measurement report is based on the message indicating activation of a transmission configuration indication, TCI, state associated with the CSI-RS.

3. The method (700) of claim 1 or 2, wherein the trigger condition is based on the message comprising a medium access control, MAC,-control element, CE, the MAC-CE being received in the cell switch command or before the cell switch command.

4. The method (700) of any one of claims 1 to 3, further comprising receiving at least one medium access control, MAC,-control element, CE, before the cell switch command, the at least one MAC-CE updating a transmission configuration indication state for the candidate cell (235).

5. The method (700) of any one of claims 1 to 4, further comprising including a CSI-RS resource indicator, CRI, in the measurement report.

6. The method (700) of claim 5, wherein a bit width of the CRI is based on a number of configured CSI-RS in a corresponding resource set for the measurement report.

7. The method (700) of any one of claims 1 to 6, wherein:

   the measurement report includes an $L \times M$ beam index for one or more candidate cells (235);
   L indicates a number of candidate cells (235);
   M indicates a number of beams per cell; and
   L and M are configured by radio resource control, RRC.

8. A method (800) comprising:

   implementing (805), by a user equipment, UE (105, 205), layer 1/layer 2, L1/L2, triggered mobility, LTM, based on the UE receiving a cell switch command from a serving cell (230);
   receiving (810), by the UE (105, 205), a channel state information reference signal, CSI-RS, from a candidate cell (235);
   performing (815) a CSI measurement for the candidate cell (235) based on the cell switch command from the serving cell (230); and
   transmitting (825) a measurement report to the candidate cell (235) based on the CSI measurement and based on switching to the candidate cell (235).

9. The method (800) of claim 8, wherein the measurement report is transmitted in at least one of:

   PUSCH scheduled by RAR;
   first PUSCH based on a configured grant, CG; and
   or first PUSCH based on a dynamic grant, DG.

10. The method (800) of claim 8 or 9, further comprising:

    determining an amount of CSI data from candidate cells (235) that the UE (105, 205) is storing exceeds a preconfigured limit; and
removing at least a portion of the CSI data.

11. The method (800) of any one of claims 8 to 10, further comprising receiving a message from the serving cell indicating support for at least one of: type-I codebook for CSI reporting and report quantity based on at least one of CSI-RS resource indicator, CRI, channel quality indicator, CQI, precoding matrix indicator, PMI, or rank indicator, RI.

12. The method (800) of any one of claims 8 to 11, wherein:

the CSI-RS from the candidate cell (235) is periodic or semipersistent, and
activation of semipersistent CSI-RS from the candidate cell (235) is based on a medium access control, MAC,-control element, CE, message.

13. The method (800) of any one of claims 8 to 12, further comprising receiving a second message from the serving cell (230), the second message indicating to remove a portion of CSI data stored by the UE (105, 205).

14. The method (800) of claim 13, wherein:

the second message comprises a downlink control information or medium access control, MAC,-control element, CE, message;
the second message indicates a criterion for selecting the portion of CSI data to remove; and
the criterion is based on at least one of a priority of CSI data or an age of CSI data.

**FIG. 1**

**FIG. 2**

EP 4 697 806 A1

FIG. 3

FIG. 4

**FIG. 5**

EP 4 697 806 A1

**FIG. 6**

700

```
┌─────────────────────────────────────────┐
│ Receive a channel state information      │
│ reference signal                         │
│ (CSI-RS)                                 │
│ 705                                      │
└─────────────────────────────────────────┘
                    │
                    ▼
┌─────────────────────────────────────────┐
│ Implement LTM based on a trigger         │
│ condition                                │
│ 710                                      │
└─────────────────────────────────────────┘
                    │
                    ▼
┌─────────────────────────────────────────┐
│ Perform a CSI measurement                │
│ 715                                      │
└─────────────────────────────────────────┘
                    │
                    ▼
┌─────────────────────────────────────────┐
│ Switch to the candidate cell             │
│ 720                                      │
└─────────────────────────────────────────┘
                    │
                    ▼
┌─────────────────────────────────────────┐
│ Transmit a measurement report            │
│ 725                                      │
└─────────────────────────────────────────┘
```

# FIG. 7

800

Implement LTM
805

Receive CSI-RS from a candidate cell
810

Perform a CSI measurement
815

Switch to the candidate cell
820

Transmit a measurement report
825

# FIG. 8

**FIG. 9**

CSI RS occasions

Cell switch command (CSC)

Uplink grant for CSI report

1000

1005

Time

1015

1005

1010

T2

1005

1025

1005

Process time

1005

1020  1005

1020

CSI RS occasions

Cell switch command (CSC)

Uplink grant for CSI report

Triggering command

**FIG. 10**

FIG. 11

Legend:
- CSI RS occasions
- Cell switch command (CSC)
- Uplink occasion for CSI report
- CSI reference resources

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/155973 A1 (OFINNO LLC [US]) 25 July 2024 (2024-07-25) <br> * paragraph [0164] * <br> * paragraph [0171] * <br> * paragraph [0340] - paragraph [0359]; figure 37 * <br> * paragraph [0412] * | 1-14 | INV. <br> H04W36/00 |
| Y | EP 4 369 790 A1 (NOKIA TECHNOLOGIES OY [FI]) 15 May 2024 (2024-05-15) <br> * paragraph [0033] - paragraph [0034] * <br> * paragraph [0082] * | 1-14 | |
| A | PRAVJYOT SINGH DEOGUN ET AL: "Discussion on L1 enhancements for inter-cell beam management", 3GPP DRAFT; R1-2302752; TYPE DISCUSSION; NR_MOB_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Online; 20230417 - 20230426 6 April 2023 (2023-04-06), XP052293328, Retrieved from the Internet: URL:https://www.3gpp.org/ftp/TSG_RAN/WG1_RL1/TSGR1_112b-e/Docs/R1-2302752.zip R1-2302752 L1 enhancements for inter-cell beam management.docx [retrieved on 2023-04-06] * Proposal 4; page 3 * | 1-14 | TECHNICAL FIELDS SEARCHED (IPC) <br><br> H04W |
| A | US 2024/155399 A1 (FARAG EMAD NADER [US] ET AL) 9 May 2024 (2024-05-09) <br> * paragraph [0006] - paragraph [0007] * <br> * paragraph [0241] - paragraph [0307] * | 1-14 | |

The present search report has been drawn up for all claims

| Place of search | Date of completion of the search | Examiner |
|---|---|---|
| Munich | 9 December 2025 | del Sorbo, Filomena |

EPO FORM 1503 03.82 (P04C01)

## ANNEX TO THE EUROPEAN SEARCH REPORT
## ON EUROPEAN PATENT APPLICATION NO.

EP 25 19 5044

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2025

| Patent document cited in search report | | | Publication date | Patent family member(s) | | | Publication date |
|---|---|---|---|---|---|---|---|
| WO 2024155973 | A1 | | 25-07-2024 | CN | 120677673 | A | 19-09-2025 |
| | | | | EP | 4639831 | A1 | 29-10-2025 |
| | | | | US | 2025338161 | A1 | 30-10-2025 |
| | | | | WO | 2024155973 | A1 | 25-07-2024 |
| EP 4369790 | A1 | | 15-05-2024 | CN | 118042485 | A | 14-05-2024 |
| | | | | EP | 4369790 | A1 | 15-05-2024 |
| | | | | US | 2024162956 | A1 | 16-05-2024 |
| US 2024155399 | A1 | | 09-05-2024 | CN | 120167119 | A | 17-06-2025 |
| | | | | KR | 20250099231 | A | 01-07-2025 |
| | | | | US | 2024155399 | A1 | 09-05-2024 |
| | | | | WO | 2024101860 | A1 | 16-05-2024 |

EPO FORM P0459

For more details about this annex : see Official Journal of the European Patent Office, No. 12/82